# EUROPÄISCHE PATENTSCHRIFT

(11) **EP 2 217 368 B1**
(45) Veröffentlichungstag und Bekanntmachung des Hinweises auf die Patenterteilung: **26.12.2018**
(21) Anmeldenummer: 08785439.4
(22) Anmeldetag: 07.08.2008
(51) Int. Cl.: B01J 20/22, B01J 20/02, B01J 20/20, B01J 20/28, B01J 20/32, A41D 31/00, A62D 5/00, B01D 39/08, B01D 39/16, B01D 39/20, B32B 7/14

(54) **SORPTIONSFILTERMATERIAL**
SORPTION FILTER MATERIAL
MATÉRIAU DE FILTRAGE SORBANT

(30) Priorität: 04.11.2007 DE 102007052910; 18.01.2008 DE 102008005218
(43) Veröffentlichungstag der Anmeldung: 18.08.2010
(73) Patentinhaber: Blücher GmbH, 40699 Erkrath (DE)
(72) Erfinder: KASKEL, Stefan, 01159 Dresden (DE)
(74) Vertreter: Von Rohr Patentanwälte Partnerschaft mbB
(86) Internationale Anmeldenummer: PCT/EP2008/006535
(87) Internationale Veröffentlichungsnummer: WO 2009/056184

(56) Entgegenhaltungen:
- EP-A- 1 785 167
- WO-A-2007/101797
- WO-A-2008/108755
- WO-A1-03/102000
- DE-A1-102005 022 844
- ANJA CAR, CHRTOMIR STROPNIK, KLAUS-VIKTOR PEINERMANN: "Hybrid membrane materials with different metal-organic frameworks (MOFs) for gas separation" DESALINATION, Bd. 200, Nr. 1-3, 2006, Seiten 424-426, XP002507031 [gefunden am 2008-12-03]

## Beschreibung

Die vorliegende Erfindung betrifft ein Sorptionsfiltermaterial, insbesondere Adsorptionsfiltermaterial, nach dem Oberbegriff von Anspruch 1, welches sich insbesondere für die Herstellung von Schutzmaterialien aller Art (wie z. B. Schutzanzügen, Schutzhandschuhen, Schutzschuhen und anderen Schutzbekleidungsstücken sowie Schutzabdeckungen z. B. für Krankentransporte, Schlafsäcken und dergleichen) sowie für die Herstellung von Filter und Filtermaterialien eignet und somit sowohl für den militärischen als auch für den zivilen Bereich, insbesondere für den ABC-Einsatz, geeignet ist.

Des weiteren betrifft die vorliegende Erfindung die vorgenannten Schutzmaterialien und die vorgenannten Filter und Filtermaterialien selbst.

Es gibt eine Reihe von Stoffen, die von der Haut aufgenommen werden und zu schweren körperlichen Schäden führen. Als Beispiele seien das blasenziehende Lost (Gelbkreuz) und das Nervengift Sarin erwähnt. Menschen, die mit solchen Giften in Kontakt kommen können, müssen eine geeignete Schutzbekleidung tragen bzw. durch geeignete Schutzmaterialien gegen diese Gifte geschützt werden.

Zu diesem Zweck sind beispielsweise luft- und wasserdampfundurchlässige Schutzanzüge bekannt, die mit einer für chemische Gifte undurchlässigen Gummischicht ausgestattet sind. Nachteilig hierbei ist, dass diese Anzüge sehr schnell zu einem Hitzestau führen, da sie luft- und wasserdampfundurchlässig sind.

Schutzanzüge gegen chemische Kampfstoffe, die für einen längeren Einsatz unter den verschiedensten Bedingungen gedacht sind, dürfen jedoch beim Träger zu keinem Hitzestau führen. Zu diesem Zweck sind luft- und wasserdampfdurchlässige Schutzanzüge bekannt, die den höchsten Tragekomfort bieten.

Die luftdurchlässigen, permeablen Schutzanzüge besitzen eine Adsorptionsfilterschicht mit Aktivkohle, welche die chemischen Gifte sehr dauerhaft bindet, so dass auch von stark kontaminierten Anzügen für den Träger keine Gefahr ausgeht. Der große Vorteil derartiger Systeme liegt darin, dass die Aktivkohle auch an der Innenseite zugänglich ist, so dass an Beschädigungen oder sonstigen undichten Stellen eingedrungene Gifte sehr schnell adsorbiert werden können.

Die Adsorptionsschicht in den zuvor beschriebenen, luftdurchlässigen, permeablen Schutzanzügen kann dabei derart ausgestaltet sein, dass z. B. entweder im Durchschnitt bis zu ca. 2,0 mm große Aktivkohleteilchen, insbesondere Aktivkohlekörnchen oder -kügelchen, an auf einem textilen Trägermaterial aufgedruckten Kleberhäufchen gebunden sind oder aber dass ein retikulierter Polyurethanschaum, der mit einer Kohlepaste aus Bindemittel und Aktivkohle imprägniert ist, als Adsorptionsschicht zur Anwendung kommt, wobei die Adsorptionsschicht im allgemeinen durch einen Außenstoff (d. h. also ein Abdeckmaterial) ergänzt wird und an der dem Träger zugewandten Innenseite wiederum durch ein leichtes textiles Material abgedeckt ist.

Des weiteren findet man aber auch Verbundstoffe, die ein Aktivkohlefaserflächengebilde, so z. B. ein Aktivkohlefaservlies oder -gewebe, beinhalten (vgl. z. B. WO 94/01198 A1 bzw. die hieraus hervorgegangene EP 0 649 332 B1 oder EP 0 230 097 A2).

Aktivkohle ist aufgrund ihrer recht unspezifischen adsorptiven Eigenschaften das am meisten angewendete Adsorbens. Aktivkohle wird im allgemeinen durch Carbonisierung (synonym auch als Schwelung, Pyrolyse, Abbrand etc. bezeichnet) und anschließende Aktivierung kohlenstoffhaltiger Ausgangsverbindungen erhalten, wobei solche Ausgangsverbindungen bevorzugt werden, die zu ökonomisch vernünftigen Ausbeuten führen (vgl. z. B. H. v. Kienle und E. Bäder, "Aktivkohle und ihre industrielle Anwendung", Enke Verlag Stuttgart, 1980).

Die Herstellung von Aktivkohle ist jedoch energetisch relativ aufwendig. Des weiteren ist für die Erzielung einer gewünschten Adsorptionseffizienz bisweilen die Imprägnierung mit Metallsalzen erforderlich, was einen zusätzlichen Arbeitsschritt darstellt. Auch weisen die hiermit ausgebildeten Adsorptionsfiltermaterialien nicht immer die gewünschte Regenerierbarkeit auf. Auch sind die Porosität und Porengrößenverteilung nicht ohne weiteres einstellbar bzw. maßzuschneidern.

Die WO 2007/101797 A1 betrifft ein Verfahren zum Entfernen von Kohlendioxid und gegebenenfalls Wasser aus Atemluft in geschlossenen oder teilgeschlossenen Systemen mit Hilfe eines porösen metallorganischen Gerüstmaterials sowie dessen Verwendung in Atemgeräten und ein Verfahren zum Regenerieren des porösen metallorganischen Gerüstmaterials.

Die DE 10 2005 022 844 A1 betrifft ein Verfahren zur Abtrennung von Geruchsstoffen aus Gasen, wobei das Gas mit einem Filter mit einem porösen metallorganischen Gerüstmaterial in Kontakt gebracht wird, wobei ausschließlich Geruchsstoffe aus Gasen entfernt werden sollen.

Die wissenschaftliche Veröffentlichung von A. Car, C. Stropnik, K.-V. Peinemann "Hybrid membrane materials with different metal-organic frameworks (MOFs) for gas separation", Desalination 200 (2006) 424-426, betrifft Membranen zur Gastrennung, welche aus einer polymeren Matrix und darin eingebetteten metallorganischen Gerüstsubstanzen (MOF-Materialien) bestehen.

Die EP 1 785 167 A2 betrifft ein Adsorptionsfiltermaterial mit biologischer und chemischer Schutzfunktion, insbesondere mit Schutzfunktion gegenüber chemischen wie biologischen Giften und Schadstoffen, wie chemischen und biologischen Kampfstoffen, wobei das Adsorptionsfiltermaterial einen mehrschichtigen Aufbau mit einer äußeren Trägerschicht und einer zweiten äußeren Trägerschicht und einer zwischen den beiden Trägerschichten angeordneten Adsorptionsschicht besitzt, wobei die erste äußere Trägerschicht und/oder die zweite äußere Trägerschicht mit einer katalytisch aktiven Komponente beaufschlagt ist bzw. sind.

Weiterhin betrifft die WO 03/102000 A1 eine metallorganische Gerüstsubstanz als solche, welche zwingend in Form eines Formkörpers ("*shaped body*") vorliegen soll, wobei der beschriebene Formkörper durch einen Formgebungsschritt erhalten werden soll.

Es ist nunmehr die Aufgabe der vorliegenden Erfindung, ein Sorptionsfiltermaterial, insbesondere Adsorptionsfiltermaterial bzw. Adsorptionsschutzmaterial, bereitzustellen, welches die zuvor geschilderten Nachteile des Standes der Technik zumindest weitgehend vermeidet bzw. abschwächt. Insbesondere sollte sich ein solches Sorptionsfiltermaterial für die Herstellung von ABC-Schutzmaterialien (wie z. B. Schutzanzügen, Schutzhandschuhen, Schutzschuhen und anderen Schutzbekleidungsstücken sowie Schutzabdeckungen, Schlafsäcken und dergleichen) oder von Filtern und Filtermaterialien eignen. Insbesondere sollen sich die Adsorptionseigenschaften in Bezug auf die Anwendung maßschneidern lassen können.

Eine weitere Aufgabe der vorliegenden Erfindung besteht darin, ein Sorptionsfiltermaterial, insbesondere Adsorptionsfiltermaterial, zu schaffen, welches neben einer guten Gas- und/oder Wasserdampfdurchlässigkeit eine Schutzfunktion gegenüber chemischen und biologischen Schadstoffen und Giften, insbesondere chemischen und biologischen Kampfstoffen, gewährleistet.

Eine wiederum weitere Aufgabe der vorliegenden Erfindung besteht in der Bereitstellung eines Sorptionsfiltermaterials, insbesondere Adsorptionsfiltermaterials, welches sich insbesondere zur Verwendung in Schutzmaterialien (wie z. B. Schutzanzügen, Schutzhandschuhen, Schutzschuhen und anderen Schutzbekleidungsstücken sowie Schutzabdeckungen, Schlafsäcken und dergleichen) eignet und dabei einen hohen Tragekomfort gewährleistet.

Schließlich besteht eine wiederum weitere Aufgabe der vorliegenden Erfindung in der Bereitstellung eines Sorptionsfiltermaterials, insbesondere Adsorptionsfiltermaterials, welches sich insbesondere zur Verwendung in Filtern und Filtermaterialien (wie z. B. zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich) eignet und dabei eine gute Filtereffizienz gewährleistet.

Zur Lösung der zuvor geschilderten Aufgabenstellung schlägt die vorliegende Erfindung - gemäß einem ersten Aspekt der vorliegenden Erfindung - ein Sorptionsfiltermaterial, insbesondere Adsorptionsfiltermaterial, gemäß Anspruch 1 vor. Weitere vorteilhafte Ausgestaltungen des erfindungsgemäßen Adsorptionsfiltermaterials sind Gegenstand der Unteransprüche.

Weiterer Gegenstand der vorliegenden Erfindung - gemäß einem weiteren Aspekt der vorliegenden Erfindung - sind Schutzmaterialien, insbesondere Schutzanzüge, Schutzhandschuhe, Schutzschuhe und andere Schutzbekleidungsstücke sowie Schutzabdeckungen, Schlafsäcke und dergleichen, welche unter Verwendung des erfindungsgemäßen Sorptionsfiltermaterials, insbesondere Adsorptionsfiltermaterials, hergestellt sind bzw. das erfindungsgemäße Sorptionsfiltermaterial, insbesondere Adsorptionsfiltermaterial, aufweisen.

Wiederum weiterer Gegenstand der vorliegenden Erfindung - gemäß einem wiederum weiteren Aspekt der vorliegenden Erfindung - sind Filter und Filtermaterialien, insbesondere zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, welche unter Verwendung des erfindungsgemäßen Sorptionsfiltermaterials, insbesondere Adsorptionsfiltermaterials, hergestellt sind bzw. das erfindungsgemäße Sorptionsfiltermaterial, insbesondere Adsorptionsfiltermaterial, aufweisen.

Gegenstand der vorliegenden Erfindung - gemäß einem **ersten** Aspekt der vorliegenden Erfindung - ist somit ein Sorptionsfiltermaterial, insbesondere Adsorptionsfiltermaterial, insbesondere für die Sorption, vorzugsweise Adsorption, von chemischen und/oder biologischen Schadstoffen, wie chemischen und/oder biologischen Kampfstoffen,
wobei das Sorptionsfiltermaterial mindestens ein gasdurchlässig, insbesondere luftdurchlässig, ausgebildetes Trägermaterial aufweist,
wobei das Trägermaterial mit einem Sorptionsmittel, insbesondere Adsorbens, beaufschlagt ist, wobei das Sorptionsmittel auf Basis mindestens einer metallorganischen Gerüstsubstanz (MOF-Material) ausgebildet ist, insbesondere mindestens eine metallorganische Gerüstsubstanz (MOF-Material) umfasst oder hieraus besteht, und
wobei das Trägermaterial zusätzlich mit einem weiteren Sorptionsmittel auf Aktivkohlebasis beaufschlagt ist.

Was das erfindungsgemäß verwendete Trägermaterial anbelangt, so ist dieses gasdurchlässig, insbesondere luftdurchlässig, ausgebildet. Dabei ist es erfindungsgemäß bevorzugt, wenn das erfindungsgemäß eingesetzte Trägermaterial eine Gasdurchlässigkeit, insbesondere Luftdurchlässigkeit, von mindestens 10 l•m⁻²•s⁻¹, insbesondere mindestens 30 l•m⁻²•s⁻¹, vorzugsweise mindestens 50 l•m⁻²•s⁻¹, besonders bevorzugt mindestens 100 l•m⁻²•s⁻¹, ganz besonders bevorzugt mindestens 500 l•m⁻²•s⁻¹, und/oder bis zu 10.000 l•m⁻²•s⁻¹, insbesondere bis zu bis zu 20.000 l•m⁻²•s⁻¹, bei einem Strömungswiderstand von 127 Pa aufweist.

Gemäß einer Ausführungsform kann das erfindungsgemäß eingesetzte Trägermaterial eine dreidimensionale Struktur aufweisen. Insbesondere kann das erfindungsgemäß eingesetzte Trägermaterial bei dieser Ausführungsform als vorzugsweise offenporiger Schaumstoff, besonders bevorzugt Polyurethanschaumstoff, ausgebildet sein.

Gemäß einer alternativen Ausführungsform dagegen kann das erfindungsgemäß eingesetzte Trägermaterial eine zweidimensionale und/oder flächige Struktur aufweisen. Insbesondere kann bei dieser Ausführungsform das erfindungsgemäß eingesetzte Trägermaterial als vorzugsweise textiles Flächengebilde ausgebildet sein. Beispielsweise kann das Trägermaterial als ein textiles Flächengebilde, vorzugsweise ein luftdurchlässiges Textilmaterial, bevorzugt ein Gewebe, Gewirke, Gestricke, Gelege oder Textilverbundstoff, insbesondere Vlies (Nonwoven), ausgebildet sein. Insbesondere kann das Trägermaterial dabei ein Flächengewicht von 5 bis 1.000 g/m², insbesondere 10 bis 500 g/m², bevorzugt 25 bis 450 g/m², aufweisen. So kann bei dieser Ausführungsform das Trägermaterial ein natürliche Fasern und/oder synthetische Fasern (Chemiefasern) enthaltendes oder hieraus bestehendes textiles Flächengebilde ein; dabei können die natürliche Fasern aus der Gruppe von Wollfasern und Baumwollfasern (CO) ausgewählt sein und/oder die synthetischen Fasern ausgewählt sein aus der Gruppe von Polyestern (PES); Polyolefinen, insbesondere Polyethylen (PE) und/oder Polypropylen (PP); Polyvinylchloriden (CLF); Polyvinylidenchloriden (CLF); Acetaten (CA); Triacetaten (CTA); Polyacryl (PAN); Polyamiden (PA), insbesondere aromatischen, vorzugsweise flammfesten Polyamiden (z. B. NOMEX®); Polyvinylalkoholen (PVAL); Polyurethanen; Polyvinylestern; (Meth-)Acrylaten; Polymilchsäuren (PLA); Aktivkohle; sowie deren Mischungen.

Zur Verbesserung der Filtereffizienz und/oder Schutzleistung des erfindungsgemäßen Trägermaterials kann es zudem vorgesehen sein, dass das Trägermaterial oleophobiert und/oder hydrophobiert ausgebildet ist (z. B. mittels entsprechender Imprägnierung, Beschichtung oder dergleichen).

Gegebenenfalls kann das erfindungsgemäße Sorptionsfiltermaterial durch weitere Schichten bzw. Lagen ergänzt werden, z. B. durch eine Abdeckschicht, die beispielsweise auf der der Trägerschicht abgewandten Seite des Sorptionsmittels angeordnet sein kann, so dass ein sandwichartiger Verbund ("Trägermaterial/Sorptionsmittel/Abdeckschicht) resultiert. Auch können ein oder mehrere weitere Zwischenschichten (z. B. Sperr- oder Barriereschichten) vorhanden sein. Dies ist dem Fachmann als solches bekannt, so dass es diesbezüglich keiner weitergehenden Ausführungen bedarf.

Üblicherweise ist das Sorptionsmittel an dem Trägermaterial fixiert. Dies kann beispielsweise mittels Verklebung (z. B. mittels eines Klebstoffs) oder infolge Eigenklebrigkeit oder Eigenadhäsion des Sorptionsmittels (z. B. mittels Sprühauftrag oder aber durch Beimengung organischer Bindemittel) realisiert werden.

Zur Erzielung einer guten Sorptionseffizienz werden Auflagemengen an Sorptionsmittel im Bereich von 5 bis 95 Gew.-%, insbesondere 7,5 bis 90 Gew.-%, vorzugsweise 10 bis 80 Gew.-%, besonders bevorzugt 12,5 bis 75 Gew.-%, ganz besonders bevorzugt 15 bis 70 Gew.-%, bezogen auf das Sorptionsfiltermaterial, realisiert.

Erfindungsgemäß ist es bevorzugt, wenn das Sorptionsmittel teilchenförmig und/oder in partikulärer Form vorliegt, insbesondere in Kornform, bevorzugt in Kugelform. Dabei kann der mittlere Teilchendurchmesser des teilchenförmigen und/oder partikulären Sorptionsmittels in weiten Bereichen variieren; insbesondere kann der mittlere Teilchendurchmesser des teilchenförmigen und/oder partikulären Sorptionsmittels im Bereich von 0,01 µm bis 10,0 mm, insbesondere 0,1 µm bis 5,0 mm, vorzugsweise 0,5 µm bis 2,5 mm, besonders bevorzugt 1 µm bis 2,0 mm, ganz besonders bevorzugt 10 µm bis 1,5 mm, liegen. Die vorgenannten Angaben des mittleren Teilchendurchmessers lassen sich beispielsweise nach ASTM D2862-97/04 bestimmen, insbesondere sofern Teilchendurchmesser ≥ 0,1 µm betroffen sind, oder aber mittels anderer gängiger Methoden, wie dynamische Lichtstreuung, raster- oder transmissionselektronenmikroskopische Methoden, Bildanalyseverfahren oder dergleichen, insbesondere sofern Teilchendurchmesser ≤ 0,1 µm betroffen sind.

Im Rahmen der vorliegenden Erfindung kommen als Sorptionsmittel, insbesondere Adsorptionsmittel (d. h. Adsorbentien), sogenannte "metallorganische Gerüstmaterialien" - synonym auch als "metallorganische Gerüstsubstanzen", "Metal Organic Frameworks (MOF)", "MOF-Substanzen", "MOF-Materialien", "poröse Koordinationspolymere" oder dergleichen bezeichnet - zum Einsatz, welche im allgemeinen porös ausgebildet sind und kristalliner Struktur sind. Diese metallorganischen Gerüstmaterialien weisen einen relativ einfachen modularen Aufbau auf und bilden eine neue Klasse poröser Materialien. Dabei dient im allgemeinen ein mehrkerniger Komplex als Vernetzungspunkt ("Knoten"), an den mehrere multifunktionelle bzw. multidentate Liganden (Liganden) angeknüpft sind. Die Bezeichnung "Metal Organic Framework (MOF)" geht auf *Omar Yaghi,* einen der Pioniere auf dem Gebiet metallorganischer Gerüstmaterialien, zurück. Unterschiedliche Verbindungen werden nach *Yaghi* einfach entsprechend der zeitlichen Abfolge ihrer Entdeckung enumerativ benannt (z. B. stammt MOF-2 aus dem Jahr 1998 und MOF-177 aus dem Jahr 2004).

Im Rahmen der vorliegenden Erfindung bezeichnet der Begriff der metallorganischen Gerüstmaterialien insbesondere das nach seiner Herstellung erhaltene, insbesondere von Verunreinigungen befreite anorganisch-organische Hybridpolymer, welches aus sich wiederholenden Baueinheiten auf Basis von Metallionen einerseits und verbrückenden, insbesondere mindestens bidentaten (zweizähnigen) Liganden andererseits aufgebaut ist. Die metallorganischen Gerüstsubstanzen sind dabei somit aus Metallionen aufgebaut, welche über mindestens bidentate bzw. zweizähnige organische Liganden derart miteinander verbunden sind, dass eine dreidimensionale Struktur entsteht, welche innere Hohlräume (Poren) aufweist, wobei die Poren dabei insbesondere durch die Metallatome und die sie verbindenden organischen Liganden definiert bzw. bestimmt werden. Ein MOF-Material kann dabei ausschließlich dieselben Metallionen (z. B. Kupfer oder Zink etc.) oder aber auch zwei oder mehr verschiedene Metallionen (d. h. Metallionen unterschiedlichen Typs, wie z. B. Kupfer und Zink etc.) aufweisen.

Für weitergehende Einzelheiten zu metallorganischen Gerüstsubstanzen (MOF) kann beispielsweise auf den Übersichtsartikel von S. Kaskel, "Poren per Baukasten" in: Nachrichten aus der Chemie, 53, April 2005, Seiten 394 bis 399*,* sowie die dort referierte Literatur verwiesen werden.

Die Herstellung metallorganischer Gerüstsubstanzen als solche ist dem Fachmann ebenso hinlänglich bekannt, so dass es diesbezüglich keiner weitergehenden Ausführungen bedarf. In diesem Zusammenhang kann auf die zuvor zitierte Literatur, insbesondere *S. Kaskel* (loc. cit.) und ergänzend zudem auf die einschlägige Patentliteratur verwiesen werden, beispielsweise und nicht beschränkend auf die WO 2007/023295 A2, US 2004/0097724 A1, WO 2005/ 049484 A1, WO 2005/068474 A1 und WO 2005/049892.

Metallorganische Gerüstmaterialien sind also poröse, im allgemeinen kristalline Materialien, insbesondere mit wohlgeordneter kristalliner Struktur, welche aus metallorganischen Komplexen mit Übergangsmetallen (z.B. Kupfer, Zink, Nickel, Cobalt etc.) als Knoten und organischen Molekülen (Liganden) als Verbindung bzw. Linker zwischen den Knoten bestehen. Aufgrund ihrer Porosität sind diese Materialien bislang nur als Materialien zur Gasspeicherung, beispielsweise zur Speicherung für Wasserstoff oder Methan, vorgeschlagen worden. Auch ihre Verwendung als Katalysatoren infolge der hohen inneren Oberfläche (BET bzw. Langmuir) mit Werten bis über 4.500 m²/g ist in Betracht gezogen worden, wobei jedoch noch keinerlei konkrete Anwendungen hierfür bestehen.

Im Rahmen der vorliegenden Erfindung hat die Anmelderin erstmals und überraschenderweise herausgefunden, dass diese metallorganischen Gerüstsubstanzen auch in ausgezeichneter Weise als Sorptionsmittel, insbesondere Adsorbens, in Adsorptionsfiltermaterialien eingesetzt werden können und dort überraschenderweise zu der Leistungsfähigkeit herkömmlicher aktivkohlebasierter Adsorbentien wenigstens gleichwertig sind, wenn nicht diese sogar übertreffen.

In diesem Zusammenhang von Bedeutung ist auch die Tatsache, dass aufgrund der im Rahmen der Herstellung der metallorganischen Gerüstsubstanzen exakt festlegbaren Porengröße und/oder Porengrößenverteilung eine hohe Selektivität in Bezug auf das Sorptionsverhalten, insbesondere Adsorptionsverhalten, erreicht werden kann, wobei die Porengröße und/oder Porengrößenverteilung beispielsweise über die Art und/oder Größe der organischen Liganden gesteuert werden kann.

Insbesondere lassen sich die Porengrößen und/oder Porengrößenverteilungen der metallorganischen Gerüstmaterialien durch Art und/oder Anzahl der mindestens bidentaten organischen Liganden und/oder durch Art und/oder Oxidationsstufe der Metallionen in weiten Bereichen einstellen. Dementsprechend ist es möglich, dass das metallorganische Gerüstmaterial Mikro-, Meso- und/oder Makroporen enthält. Die Anwesenheit von Mikro- und/oder Mesoporen kann beispielsweise durch Stickstoffadsorptionsmessungen bei 77 K gemäß DIN 66131, DIN 66135 und/oder DIN 66134 bestimmt werden.

Im Rahmen der vorliegenden Erfindung bezeichnet der Begriff der Mikroporen solche Poren mit Porendurchmessern von bis zu 20 Å einschließlich, wohingegen der Begriff der Mesoporen solche Poren mit Porendurchmessern im Bereich von mehr als 20 Å (d. h. > 20 Å) bis 500 Å einschließlich bezeichnet und der Begriff der Makroporen solche Poren mit Porendurchmessern von mehr als 500 Å (d. h. > 500 Å) bezeichnet, wobei diese Definitionen der Poren den Definitionen entsprechen, wie sie in Pure Appl. Chem. 45 (1976), Seiten 71 ff., insbesondere *Seite 79,* zu finden sind:

| | |
|---|---|
| • Mikroporen: | Porendurchmesser_{Mikroporen} ≥ 20 Å |
| • Mesoporen: | 20 Å < Porendurchmesser_{Mesoporen} ≤ 500 Å |
| • Makroporen: | Porendurchmesser_{Makroporen} > 500 Å. |

Ein besonderer Vorteil der als Sorptionsmittel, insbesondere Adsorbens, eingesetzten metallorganischen Gerüstsubstanzen ist die Tatsache, dass sich die Porengröße ebenso wie die Porengrößenverteilung dieser porösen Materialien im Rahmen der Synthese gezielt einstellen lässt, insbesondere - wie zuvor beschrieben - durch Art und/oder Anzahl der Liganden und/oder durch Art und/oder Oxidationsstufe des eingesetzten Metalls. So lassen sich beispielsweise auf diese Weise Sorptionsmittel mit monomodaler Verteilung der Porengröße herstellen, beispielsweise Sorptionsmittel mit überwiegend mikroporösem Anteil, Sorptionsmittel mit überwiegend mesoporösem Anteil oder Sorptionsmittel mit überwiegend makroporösem Anteil. Gleichermaßen ist es möglich, polymodale Porengrößenverteilungen (z. B. Sorptionsmittel mit jeweils hohem, z. B. gleichem Anteil Mikroporen einerseits und Mesoporen andererseits) zu erhalten, sofern es im Rahmen der vorliegenden Anwendung gewünscht ist.

Dementsprechend können in Abhängigkeit von den jeweils eingesetzten metallorganischen Gerüstsubstanzen die Eigenschaften der Sorptionsmittel, wie beispielsweise die inneren Oberflächen (BET bzw. Langmuir) und Porengesamtvolumina, in weiten Bereichen variieren, wie nachfolgend noch ausgeführt.

Im Rahmen der vorliegenden Erfindung wird also, wie zuvor beschrieben, ein auf Basis mindestens einer metallorganische Gerüstsubstanz (MOF-Material) ausgebildetes Sorptionsmittel eingesetzt.

Gemäß einer Ausführungsform der vorliegenden Erfindung kann dabei das Sorptionsmittel aus der mindestens einen metallorganischen Gerüstsubstanz (MOF-Material) bestehen, d. h. mit anderen Worten das Sorptionsmittel die mindestens eine metallorganische Gerüstsubstanz (MOF-Material) in Masse bzw. als solche enthalten (d. h. also ohne ein weiteres Bindemittel etc.).

Gemäß einer alternativen Ausführungsform der vorliegenden Erfindung dagegen kann das Sorptionsmittel eine Mischung aus metallorganischen Gerüstsubstanz (MOF-Material) einerseits und organischem Bindemittel andererseits umfassen, d. h. mit anderen umfasst bei dieser Ausführungsform das Sorptionsmittel die mindestens eine metallorganischen Gerüstsubstanz (MOF-Material) in einer in einem organischem Bindemittel eingelagerten Form. Hierbei kann das MOF-Material/Bindemittel-Mengenverhältnis in weiten Bereichen variieren; insbesondere kann bei dieser Ausführungsform das Sorptionsmittel metallorganische Gerüstsubstanz (MOF-Material) einerseits und organisches Bindemittel andererseits in einem MOF-Material/Bindemittel-Mengenverhältnis > 1 und insbesondere im Bereich von 1 : 1 bis 10 : 1, insbesondere 1,1 : 1 bis 5 : 1, vorzugsweise 1,2 : 1 bis 3 : 1, besonders bevorzugt 1,4 : 1 bis 2,5 : 1, enthalten. Bevorzugt ist das organische Bindemittel ein organisches Polymer; dabei kann das organische Bindemittel beispielsweise ausgewählt sein aus der Gruppe von Polyestern, Polystyrolen, Poly(meth-)acrylaten, Polyacrylaten, Cellulosen, Polyamiden, Polyolefinen, Polyalkylenoxiden sowie deren Mischungen.

Bei dieser Ausführungsform, wonach das Sorptionsmittel eine Mischung aus metallorganischen Gerüstsubstanz (MOF-Material) einerseits und organischem Bindemittel andererseits umfasst, sind die verschiedensten Ausgestaltungen möglich: Beispielsweise kann gemäß einer Ausgestaltung die Mischung aus metallorganischer Gerüstsubstanz (MOF-Material) einerseits und organischem Bindemittel andererseits in zu Formkörpern verarbeiteter Form vorliegen, insbesondere in Form von Kügelchen, Körnchen, Pellets, Granulaten, Stäbchen, Pillen, Tabletten oder dergleichen; dabei kann die Formgebung z. B. mit zu diesen Zwecken üblichen Formgebungsverfahren erfolgt sein, insbesondere Compoundieren, Extrudieren (Strangziehen), (Ver-)Pressen, Schmelzverpressen oder dergleichen. Gemäß einer hierzu alternativen Ausführungsform kann dagegen das Bindemittel in flächiger und/oder zweidimensionaler Form, insbesondere in Form einer Membran, einer Folie, eines Films oder dergleichen, vorliegen (z. B. mit Dicken im Bereich von 0,1 µm bis 10 mm, insbesondere 0,5 µm bis 1 mm, vorzugsweise 1 µm bis 0,1 mm,), wobei die metallorganische Gerüstsubstanz (MOF-Material), vorzugsweise in partikulärer Form, hieran angelagert und/oder hierin eingelagert ist; im Fall geschlossener Bindemittelschichten resultiert eine gasundurchlässige, insbesondere luftundurchlässige, aber vorzugsweise wasserdampfdurchlässige (d. h. somit atmungsaktive) Sperr-bzw. Barriereschicht aus Bindemittel mit hieran angelagerten und/oder hierin eingebetteten MOF-Material.

Wie zuvor geschildert, weist die als Sorptionsmittel eingesetzte metallorganische Gerüstsubstanz (MOF-Material) sich wiederholende Struktureinheiten auf Basis jeweils mindestens eines Metalls, insbesondere Metallatoms oder Metallions, einerseits und mindestens eines wenigstens bidentaten (zweizähnigen) und/oder verbrückenden organischen Liganden andererseits auf.

Als Metall können dabei grundsätzlich sämtliche Metalle des Periodensystems der Elemente zum Einsatz kommen, welche mit mindestens einer mindestens zweizähnigen und/oder verbrückenden organischen Verbindung (Ligand) ein metallorganisches poröses Gerüstmaterial auszubilden imstande sind.

Insbesondere ist es im Rahmen der vorliegenden Erfindung bevorzugt, wenn die metallorganische Gerüstsubstanz (MOF-Material) mindestens ein Metall, insbesondere Metallatom oder Metallion, aufweist, welches ausgewählt ist aus Elementen der Gruppe Ia, IIa, IIIa, IVa bis VIIIa sowie Ib und VIb des Periodensystems der Elemente, vorzugsweise ausgewählt ist aus der Gruppe von Mg, Ca, Sr, Ba, Sc, Y, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, Al, Ga, In, Tl, Si, Ge, Sn, Pb, As, Sb und Bi, besonders bevorzugt ausgewählt ist aus der Gruppe von Zn, Cu, Ni, Pd, Pt, Ru, Th, Fe, Mn, Ag, Al und Co, ganz besonders bevorzugt ausgewählt ist aus der Gruppe von Cu, Fe, Co, Zn, Mn, Al und Ag, noch mehr bevorzugt ausgewählt ist aus der Gruppe von Cu, Fe, Al und Zn.

Was den oder die Liganden anbelangt, so weist die metallorganische Gerüstsubstanz (MOF-Material) mindestens einen wenigstens bidentaten (zweizähnigen) und/oder verbrückenden organischen Liganden auf, wobei der Ligand mindestens eine funktionelle Gruppe umfasst, welche imstande ist, zu einem Metall, insbesondere Metallatom oder Metallion, mindestens zwei koordinative Bindungen auszubilden und/oder zu zwei oder mehreren Metallen, insbesondere Metallatomen oder Metallionen, gleich oder verschieden, jeweils eine koordinative Bindung auszubilden; dabei kann die funktionelle Gruppe des Liganden mindestens ein Heteroatom, bevorzugt aus der Gruppe von N, O, S, B, P, Si und Al, besonders bevorzugt N, O und S, aufweisen. Bevorzugterweise kann der Ligand insbesondere ausgewählt sein aus mindestens zweiwertigen organischen Säuren, insbesondere Dicarbonsäuren, Tricarbonsäuren, Tetracarbonsäuren und deren Mischungen, besonders bevorzugt gegebenenfalls mindestens einfach substituierten aromatischen, insbesondere mono-, di-, tri-, tetra- oder höherkernigen aromatischen Di-, Tri- oder Tetracarbonsäuren; dabei kann jeder der Kerne mindestens ein Heteroatom, gleich oder verschieden, wie insbesondere N, O, S, B, P, Si und/oder Al, bevorzugt N, S und/oder O, enthalten.

Üblicherweise liegt die metallorganische Gerüstsubstanz (MOF-Material) in kristalliner Form vor. Insbesondere kann der Kristallinitätsgrad mindestens 60 %, insbesondere mindestens 70 %, vorzugsweise mindestens 80 %, besonders bevorzugt mindestens 90 %, besonders bevorzugt mindestens 95 %, ganz besonders bevorzugt mindestens 99 % oder mehr, betragen. Infolge der Kristallinität lassen sich erfindungsgemäß besonders gute Härten, Abriebfestigkeiten und/oder Berstfestigkeiten des Sorptionsmittels erhalten, was positiv in Bezug auf die Gebrauchseigenschaften des erfindungsgemäßen Sorptionsfiltermaterials ist.

Besonders vorteilhafte Eigenschaften des erfindungsgemäßen Sorptionsfiltermaterials, insbesondere im Hinblick auf die Sorptionseigenschaften, lassen sich erreichen, wenn das Sorptionsmittel bzw. die metallorganische Gerüstsubstanz (MOF-Material) in aktivierter Form vorliegt. Eine derartige Aktivierung führt im allgemeinen zu einer nicht unbeträchtlichen Erhöhung der inneren Oberfläche (BET und Langmuir) sowie des Gesamtporenvolumens des Sorptionsmittels bzw. der metallorganischen Gerüstsubstanz (MOF-Material). Die Aktivierung lässt sich vorteilhafterweise dadurch erreichen, dass das Sorptionsmittel bzw. die metallorganische Gerüstsubstanz (MOF-Material), insbesondere nach seiner bzw. ihrer Herstellung bzw. vor seiner Verwendung in dem erfindungsgemäßen Sorptionsfiltermaterial, einer Wärmebehandlung unterzogen wird. Die Temperaturbehandlung zur Aktivierung wird unterhalb der Zersetzungstemperatur, insbesondere bei Temperaturen im Bereich von 90 °C bis 300 °C, vorzugsweise 100 °C bis 250 °C, bevorzugt 110 °C bis 220 °C, durchgeführt, vorzugsweise unter einer Zeitdauer von 0,1 bis 48 Stunden, insbesondere 1 bis 30 Stunden, bevorzugt 5 bis 24 Stunden. Die Wärmebehandlung kann entweder unter zumindest im wesentlichen nichtreaktiver, vorzugsweise zumindest im wesentlichen inerter Atmosphäre oder aber in oxidierender Atmosphäre (beispielsweise in Gegenwart von Sauerstoff, z. B. unter Umgebungsatmosphäre) durchgeführt werden. Ohne sich auf eine bestimmte Theorie festlegen zu wollen, lässt sich die positive Wirkung der Aktivierungsbehandlung dadurch erklären, dass im Rahmen der Aktivierung bestehende Poren von etwaigen Verunreinigungen befreit bzw. gereinigt werden und/oder zusätzliche Poren, Risse, Spalten oder dergleichen an der Oberfläche der MOF-Materialien generiert werden, so dass deren Porosität und somit das Gesamtporenvolumen und die innere Oberfläche ansteigen.

Bei allen vorstehend genannten und noch im folgenden genannten Parameterangaben ist zu beachten, dass die aufgeführten Grenzwerte, insbesondere Ober- und Untergrenzen, mitumfasst sind, d. h. alle Werteangaben verstehen sich einschließlich der jeweiligen Grenzen, sofern nichts Gegenteiliges im Einzelfall angegeben ist. Weiterhin versteht es sich von selbst, dass es einzelfallbedingt oder anwendungsbezogen gegebenenfalls erforderlich sein kann, geringfügig von den genannten Grenzwerten abzuweichen, ohne dass der Rahmen der vorliegenden Erfindung verlassen ist.

Die vorgenannten und im folgenden noch genannten Parameterangaben werden mit genormten oder explizit angegebenen Bestimmungsverfahren oder aber mit dem Fachmann an sich geläufigen Bestimmungsmethoden bestimmt.

Die Parameterangaben betreffend die Charakterisierung der Porosität und der damit in Zusammenhang stehenden Parameter, wie insbesondere Gesamtporosität, innere Oberfläche, Porengröße, Porengrößeverteilung, Adsorptionsvolumen, adsorbiertes Volumen etc., ergeben sich jeweils aus der Stickstoffisotherme des betreffenden bzw. vermessenen MOF-Materials bzw. Sorptionsmittels, insbesondere der Stickstoffisotherme bei tiefen Temperaturen (üblicherweise bei T = 77 Kelvin, sofern nachfolgend nichts Gegenteiliges angegeben ist).

Wie zuvor beschrieben, weist die erfindungsgemäß als Sorptionsmittel eingesetzte metallorganische Gerüstsubstanz (MOF-Material) innere Hohlräume, insbesondere Poren, auf, d. h. die metallorganische Gerüstsubstanz (MOF-Material) ist porös ausgebildet. Hieraus resultieren relativ hohe innere Oberflächen und Gesamtporenvolumina.

So ist eine Besonderheit der erfindungsgemäß als Sorptionsmittel eingesetzten metallorganischen Gerüstsubstanzen (MOF-Materialien) unter anderem darin zu sehen, dass sie über ein sehr großes Gesamtporenvolumen nach Gurvich verfügen, so dass eine große Adsorptionskapazität bereitgestellt wird. Was die Bestimmung des Gesamtporenvolumens nach Gurvich anbelangt, so handelt es sich um eine dem Fachmann auf diesem Gebiet an sich bekannte Mess-/Bestimmungsmethode; zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technology Series, Seiten 111 ff.

Im allgemeinen beträgt das Gesamtporenvolumen nach Gurvich der erfindungsgemäß als Sorptionsmittel eingesetzten metallorganischen Gerüstsubstanzen (MOF-Materialien) mindestens 0,1 cm³/g, insbesondere mindestens 0,2 cm³/g, vorzugsweise mindestens 0,3 cm³/g, und kann Werte von bis zu 2,0 cm³/g, insbesondere bis zu 3,0 cm³/g, vorzugsweise bis zu 4,0 cm³/g, besonders bevorzugt bis zu 5,0 cm³/g, erreichen.

Im allgemeinen liegt das Gesamtporenvolumen nach Gurvich der erfindungsgemäß als Sorptionsmittel eingesetzten metallorganischen Gerüstsubstanzen (MOF-Materialien) im Bereich von 0,1 bis 5,0 cm³/g, insbesondere 0,2 bis 4,5 cm³/g, vorzugsweise 0,3 bis 4,0 cm³/g.

Auch die gewichts- und volumenbezogenen Volumina (Sorptionsvolumina) V_{ads} (N₂) der erfindungsgemäß als Sorptionsmittel eingesetzten metallorganischen Gerüstsubstanzen (MOF-Materialien) bei unterschiedlichen Partialdrücken p/p₀ ist ausreichend groß:
So weisen die erfindungsgemäß als Sorptionsmittel eingesetzten metallorganischen Gerüstsubstanzen (MOF-Materialien) im allgemeinen ein gewichtsbezogenes adsorbiertes N₂-Volumen V_{ads (gew.)}, bestimmt bei einem Partialdruck p/p₀ von 0,25 (T = 77 K), im Bereich von 10 bis 1.000 cm³/g, vorzugsweise 20 bis 850 cm³/g, besonders bevorzugt 30 bis 800 cm³/g, auf.

Des weiteren weisen die erfindungsgemäß als Sorptionsmittel eingesetzten metallorganischen Gerüstsubstanzen (MOF-Materialien) im allgemeinen ein volumenbezogenes adsorbiertes N₂-Volumen V_{ads (vol.)}, bestimmt bei einem Partialdruck p/p₀ von 0,25 (T = 77 K), im Bereich von 10 bis 500 cm³/cm³, vorzugsweise 20 bis 400 cm³/cm³, besonders bevorzugt 30 bis 300 cm³/cm³, auf.

Des weiteren weisen die erfindungsgemäß als Sorptionsmittel eingesetzten metallorganischen Gerüstsubstanzen (MOF-Materialien) im allgemeinen ein gewichtsbezogenes adsorbiertes N₂-Volumen V_{ads (gew.)}, bestimmt bei einem Partialdruck p/p₀ von 0,995 (T = 77 K), im Bereich von 40 bis 3.000 cm³/g, vorzugsweise 50 bis 2.750 cm³/g, besonders bevorzugt 100 bis 2.500 cm³/g, auf.

Schließlich weisen die erfindungsgemäß als Sorptionsmittel eingesetzten metallorganischen Gerüstsubstanzen (MOF-Materialien) im allgemeinen ein volumenbezogenes adsorbiertes N₂-Volumen V_{ads (vol.)}, bestimmt bei einem Partialdruck p/p₀ von 0,995 (T = 77 K), im Bereich von 30 bis 1.000 cm³/cm³, vorzugsweise 40 bis 800 cm³/cm³, besonders bevorzugt 50 bis 700 cm³/cm³, auf.

Aufgrund ihrer porösen Strukturen weisen die erfindungsgemäß als Sorptionsmittel eingesetzten metallorganischen Gerüstsubstanzen (MOF-Materialien) im allgemeinen gleichermaßen hohe innere bzw. spezifische Oberflächen (BET wie Langmuir) auf.

Die Langmuir-Isotherme ist das einfachste Sorptionsmodell, welches physikalische Grundlagen besitzt (vgl. z. B. I. Langmuir "Surface Chemistry", Nobel Lecture, 14. Dezember 1932, in: Nobel Lectures, Chemistry 1922-1941 Elsevier Publishing Company, Amsterdam, 1966*,* PDF-Version unter *nobel-prize.org,* d. h. *http:*//*nobelprize.org*/*nobel_prizes*/*chemistry*/*laureates*/*1932*/ *langmuir-lecture.html*)*.* Es werden die Annahmen getroffen, dass die Adsorption in einer einzelnen molekularen Schicht stattfindet, alle Sorptionsplätze gleichwertig sind und die Oberfläche gleichförmig ist und es keine Wechselwirkungen zwischen benachbarten Sorptionsplätzen und adsorbierten Teilchen gibt; die Langmuir-Isotherme kann folglich nur eine maximale Ladung der Sorptionsoberflächen abbilden.

Das BET-Modell dagegen erweitert die Langmuir-Isotherme um das Verhalten bei hoher Konzentration des Sorbats nahe der Löslichkeit bzw. Sättigungskonzentration, wobei Grundlage des BET-Modells die Sorption in mehreren molekularen Schichten an der Oberfläche ist, so dass die Beladung theoretisch ins Unendliche steigen kann (vgl. z. B. S. Brunauer, P. H. Emmett, E. Teller, "Adsorption of Gas on Multimolecular Layers", J. Am. Chem. Soc., 60, 1938, Seiten 309-319).

Die Bestimmung der spezifischen Oberfläche gemäß BET und Langmuir ist dem Fachmann grundsätzlich als solches wohlbekannt, so dass diesbezüglich keine weitergehenden Einzelheiten ausgeführt werden zu brauchen. Alle BET-Oberflächenangaben beziehen sich auf die Bestimmung gemäß ASTM D6556-04. Im Rahmen der vorliegenden Erfindung wird im übrigen zur Bestimmung der BET-Oberfläche die dem Fachmann hinlänglich bekannte sogenannte MultiPoint-BET-Bestimmungsmethode (MP-BET), insbesondere in einem Partialdruckbereich p/p₀ von 0,05 bis 0,1, angewendet.

In Bezug auf weitergehende Einzelheiten zur Bestimmung der BET-Oberfläche bzw. zu der BET-Methode kann im übrigen auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur und auf Winnacker-Küchler (3. Auflage), Band 7, Seiten 93 ff. sowie auf Z. Anal. Chem. 238, Seiten 187 bis 193 (1968) verwiesen werden.

Wie zuvor ausgeführt, ist eine weitere Besonderheit der erfindungsgemäß als Sorptionsmittel eingesetzten metallorganischen Gerüstsubstanzen (MOF-Materialien) in der relativ großen Langmuir-Oberfläche zu sehen, welche üblicherweise mindestens 150 m²/g, insbesondere mindestens 250 m²/g, vorzugsweise mindestens 300 m²/g, besonders bevorzugt mindestens 375 m²/g, ganz besonders bevorzugt mindestens 750 m²/g, noch mehr bevorzugt mindestens 1.500 m²/g, betragen kann und im allgemeinen Werte von bis zu 6.000 m²/g, insbesondere bis zu 6.250 m²/g, vorzugsweise bis zu 6.500 m²/g, besonders bevorzugt bis zu 6.750 m²/g, ganz besonders bevorzugt bis zu 7.000 m²/g, noch mehr bevorzugt bis zu 7.500 m²/g, annehmen kann. Im allgemeinen liegt die Langmuir-Oberfläche der erfindungsgemäß als Sorptionsmittel eingesetzten metallorganischen Gerüstsubstanzen (MOF-Materialien) im Bereich von 150 m²/g bis 7.500 m²/g, insbesondere 225 m²/g bis 7.000 m²/g, vorzugsweise 300m²/g bis 6.500 m²/g, besonders bevorzugt 375 m²/g bis 6.250 m²/g, ganz besonders bevorzugt 750 m²/g bis 6.000 m²/g.

Wie zuvor ebenfalls ausgeführt, ist eine weitere Besonderheit der erfindungsgemäß als Sorptionsmittel eingesetzten metallorganischen Gerüstsubstanzen (MOF-Materialien) in der relativ großen BET-Oberfläche zu sehen, welche üblicherweise mindestens 100 m²/g, insbesondere mindestens 150 m²/g, vorzugsweise mindestens 200 m²/g, besonders bevorzugt mindestens 250 m²/g, ganz besonders bevorzugt mindestens 500 m²/g, noch mehr bevorzugt mindestens 1.000 m²/g, betragen kann und im allgemeinen Werte von bis zu 4.000 m²/g, insbesondere bis zu 4.250 m²/g, vorzugsweise bis zu 4.500 m²/g, besonders bevorzugt bis zu 4.750 m²/g, ganz besonders bevorzugt bis zu 5.000 m²/g und mehr, annehmen kann. Im allgemeinen liegt die BET-Oberfläche der erfindungsgemäß als Sorptionsmittel eingesetzten metallorganischen Gerüstsubstanzen (MOF-Materialien) im Bereich von 100 m²/g bis 5.000 m²/g, insbesondere 150 m²/g bis 4.750 m²/g, vorzugsweise 200 m²/g bis 4.500 m²/g, besonders bevorzugt 250 m²/g bis 4.250 m²/g, ganz besonders bevorzugt 500 m²/g bis 4.000 m²/g.

Darüber hinaus verfügen die erfindungsgemäß als Sorptionsmittel eingesetzten metallorganischen Gerüstsubstanzen über eine gute Butanadsorption und gleichzeitig eine gute Iodzahl, was ihre Eigenschaft charakterisiert, gute Adsorptionseigenschaften in Bezug auf verschiedenste zu adsorbierende Stoffe aufzuweisen.

So liegt die gemäß ASTM D5742-95/00 bestimmte Butanadsorption der erfindungsgemäß als Sorptionsmittel eingesetzten metallorganischen Gerüstsubstanzen im allgemeinen bei mindestens 10 %, insbesondere mindestens 20 %, vorzugsweise mindestens 30 %. Im allgemeinen weisen die erfindungsgemäß als Sorptionsmittel eingesetzten metallorganischen Gerüstsubstanzen eine nach ASTM D5742-95/00 bestimmte Butanadsorption im Bereich von 10 bis 95 %, insbesondere 20 bis 85 %, vorzugsweise 30 bis 80 %, auf.

Je nach Porengrößenverteilung können die erfindungsgemäß als Sorptionsmittel eingesetzten metallorganischen Gerüstsubstanzen gleichermaßen gute Methylenblau- und Melasseadsorptionszahlen aufweisen, welche gemeinsam als Maß für diejenige verfügbare Oberfläche gewertet werden können, die überwiegend durch Meso- und Makroporen bereitgestellt wird. So bezieht sich die Methylenblauzahl bzw. der Methylenblauadsorption, welche die Menge an pro definierter Menge des Sorptionsmittels adsorbiertem Methylenblau unter definierten Bedingungen bezeichnet (d. h. die Anzahl an ml einer Methylenblaustandardlösung, die durch eine definierte Menge trockenen und pulverisierten Sorptionsmittels entfärbt werden), auf größere Mikroporen und überwiegend kleinere Mesoporen und gibt einen Hinweis auf die Adsorptionskapazität in Bezug auf Moleküle, welche eine vergleichbare Größe wie Methylenblau besitzen. Dagegen ist die Melassezahl als Maß für die Meso- und Makroporosität zu werten ist und bezeichnet die Menge an Sorptionsmittel, welche erforderlich ist, um eine Standardmelasselösung zu entfärben, so dass die Melassezahl einen Hinweis auf die Adsorptionskapazität in Bezug auf Moleküle gibt, welche eine vergleichbare Größe wie Melasse (im allgemeinen Zuckerrübenmelasse) besitzen. Zusammen können die Methylenblau- und Melassezahl somit als Maß für die Meso- und Makroporosität gewertet werden.

So kann der nach der Methode gemäß CEFIC (Conseil Europeen des Federations des l'Industrie Chimique, Avenue Louise 250, Bte 71, B - 1050 Brüssel, November 1986, European Council of Chemical Manufacturers' Federations, Testmethoden für Aktivkohlen, Ziffer 2.4 "Methylenblauwert", Seiten 27/28) bestimmte Methylenblauwert der erfindungsgemäß als Sorptionsmittel eingesetzten metallorganischen Gerüstsubstanzen mindestens 5 ml, insbesondere mindestens 7,5 ml, vorzugsweise mindestens 10 ml, betragen und im allgemeinen im Bereich von 5 bis 100 ml, insbesondere 7,5 bis 80 ml, vorzugsweise 10 bis 75 ml, liegen.

Die dimensionslose Melassezahl dagegen kann grundsätzlich entweder nach der Norit-Methode (Norit N.V., Amersfoort, Niederlande, Norit-Standardmethode NSTM 2.19 "*Molasses Number (Europe)*") oder alternativ nach der PACS-Methode (PACS = Professional Analytical and Consulting Services Inc., Coraopolis Pennsylvania, USA) bestimmt werden. Bei der Bestimmung der Melassezahl nach der Norit- oder PACS-Methode wird diejenige Menge an pulverisiertem Probenmaterial bestimmt, welche erforderlich ist, um eine Standardmelasselösung zu entfärben, wobei die Bestimmung photometrisch erfolgt, wobei die Einstellung der Melassestandardlösung gegen einen Standard erfolgt. Im Rahmen der vorliegenden Erfindung werden die Werte für die Melassezahl nach der PACS-Methode ermittelt. So kann die nach der PACS-Methode bestimmte Melassezahl der erfindungsgemäß als Sorptionsmittel eingesetzten metallorganischen Gerüstsubstanzen mindestens 30, insbesondere mindestens 35, vorzugsweise mindestens 40, betragen und im allgemeinen im Bereich von 30 bis 1.500, insbesondere 35 bis 1.400, vorzugsweise 40 bis 1.250, ganz besonders bevorzugt 50 bis 1.200, liegen.

Trotz der hohen Porosität weisen die erfindungsgemäß als Sorptionsmittel eingesetzten metallorganischen Gerüstsubstanzen eine akzeptable Druck- bzw. Berstfestigkeit (Gewichtsbelastbarkeit) sowie eine akzeptable Abriebfestigkeit auf.

Weiterhin weisen die erfindungsgemäß als Sorptionsmittel eingesetzten metallorganischen Gerüstsubstanzen im allgemeinen eine Schüttdichte (Apparent Density), bestimmt nach ASTM D2854, im Bereich von 50 bis 1.000 g/l, insbesondere 100 bis 900 g/l, vorzugsweise 150 bis 800 g/l, auf.

Durch den Einsatz eines Sorptionsmittel auf Basis mindestens einer metallorganischen Gerüstsubstanz (MOF-Material) in dem erfindungsgemäßen Sorptionsfiltermaterial, insbesondere Adsorptionsfiltermaterial, lassen sich eine Vielzahl von Vorteilen erreichen. Beispielhaft und nicht beschränkend wird auf das exzellente Sorptionsverhalten, insbesondere Adsorptionsverhalten, hingewiesen, welches vergleichbar ist mit entsprechenden Sorptionsfiltermaterialien auf Basis von Aktivkohle als Sorptionsmittel, jedoch bei einem im Vergleich hierzu geringeren energetischen Aufwand bei der Herstellung und dem zusätzlichen Vorteil des Vorhandseins von Metallionen in den metallorganischen Gerüstsubstanzen, welche zusätzlich eine katalytisch wirksame Komponente darstellen und auch zu einer gewissen bioziden bzw. biostatischen Wirkung bei der Verwendung des erfindungsgemäßen Sorptionsfiltermaterials führen.

Im Rahmen der vorliegenden Erfindung ist es somit in beeindruckender Weise gelungen, ein neues Sorptionsfiltermaterial auf Basis eines für diese Anwendung erstmals in Betracht gezogenen Sorptionsmittels bereitzustellen, welches die technischen Eigenschaften eines Sorptionsmittels, insbesondere Adsorbens, einerseits und einer katalytisch wirkenden Komponente andererseits in einem einzigen Material miteinander vereint.

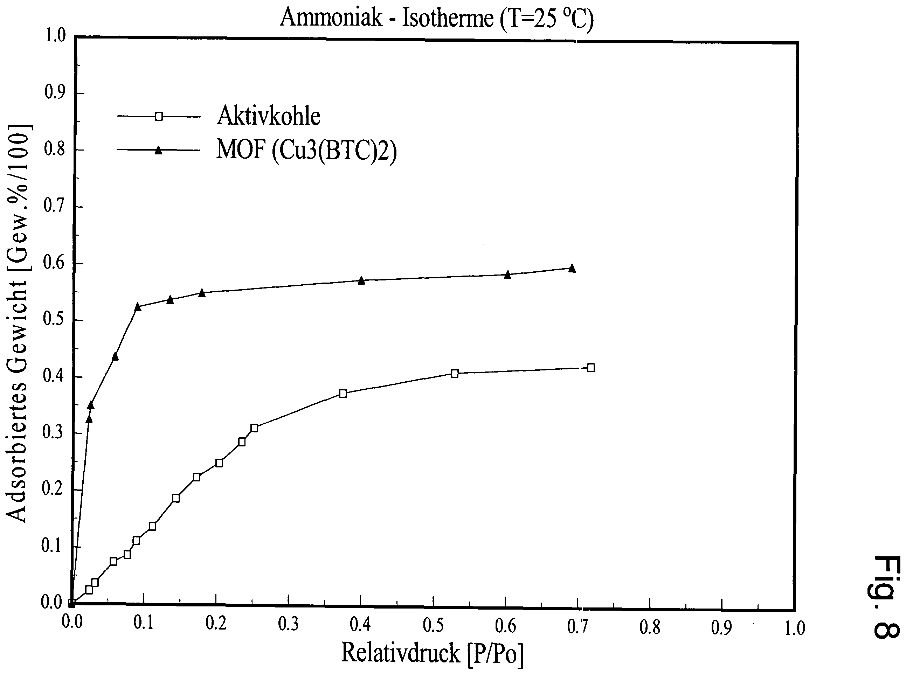

Wie die Anmelderin überraschend herausgefunden hat, besitzen die erfindungsgemäß als Sorptionsmittel eingesetzten MOF-Materialien ein im Vergleich zu herkömmlichen Adsorbentien (z. B. auf Aktivkohlebasis) verbessertes Sorptionsverhalten, insbesondere Adsorptionsverhalten, gegenüber polaren Substanzen (z. B. Ammoniak etc.). So zeigen die in Fig. 8 dargestellten Ammoniak-Adsorptionsisothermen von MOF-Material (siehe obere Kurve in Fig. 8, dort konkret Cu₃(BTC)₂ als MOF-Material, vgl. auch nachfolgende Ausführungsbeispiele) einerseits und Aktivkohle (siehe untere Kurve in Fig. 8) andererseits, dass das MOF-Material das polare Ammoniak besser bzw. effizienter als Aktivkohle zu adsorbieren imstande ist, was sich in einer im Vergleich zu Aktivkohle größeren Menge an adsorbiertem Ammoniak im Fall des MOF-Materials zeigt - wenngleich das diesbezügliche Adsorptionsvermögen von Aktivkohle immer noch als ausreichend und effizient einzustufen ist.

Gemäß der vorliegenden Erfindung werden die metallorganischen Gerüstsubstanzen (MOF-Materialien) im Rahmen des erfindungsgemäßen Sorptionsfiltermaterials mit einem weiteren, zusätzlichen Sorptionsmittel bzw. Adsorbens auf Aktivkohlebasis kombiniert, d. h. also die metallorganischen Gerüstsubstanzen (MOF-Materialien) werden gemeinsam mit einem weiteren Sorptionsmittel bzw. Adsorbens auf Aktivkohlebasis eingesetzt. So kann gemäß einer nicht erfindungsgemäßen Ausführungsform beispielsweise das Trägermaterial des erfindungsgemäßen Sorptionsfiltermaterials als ein Aktivkohlefaserflächengebilde ausgebildet sein; derartige Aktivkohleflächengebilde können beispielsweise ein Flächengewicht von 20 bis 200 g/m², insbesondere 50 bis 150 g/m², aufweisen, und bei diesen Aktivkohleflächengebilden kann es sich beispielsweise um Aktivkohlegewebe, -gewirke, -gelege oder -verbundstoffe handeln, beispielsweise auf Basis von karbonisierter und aktivierter Cellulose und/oder eines karbonisierten und aktivierten Acrylnitrils. Auch besteht alternativ die Möglichkeit, zu diesem Zweck kornförmige, vorzugsweise kugelförmige Aktivkohlepartikel (sogenannte Kornkohle, insbesondere Kugelkohle, z. B. mit mittleren Durchmessern der Aktivkohlepartikel von weniger als 1,0 mm, vorzugsweise weniger als 0,8 mm, bevorzugt weniger als 0,6 mm, jedoch im allgemeinen von mindestens 0,1 mm) einzusetzen, mit denen dann das Trägermaterial - gemeinsam mit MOF-basierten Sorptionsmittelpartikeln - beaufschlagt wird, insbesondere wobei bei dieser Ausführungsform die Aktivkohleteilchen in einer Auflagemenge von 5 bis 500 g/m², insbesondere 10 bis 400 g/m², vorzugsweise 20 bis 300 g/m², bevorzugt 25 bis 250 g/m², auf dem Trägermaterial aufgebracht werden können. Die eingesetzte Aktivkohle weist - unabhängig, ob in Form von Fasern (z. B. Aktivkohlefaserflächengebilden) oder Partikeln - vorzugsweise eine innere Oberfläche (BET) von mindestens 800 g/m², insbesondere von mindestens 900 g/m², vorzugsweise von mindestens 1.000 g/m², bevorzugt im Bereich von 800 bis 1.500 g/m², auf. Zur weitergehenden Erhöhung der Adsorptionseffizienz bzw. der Adsorptionsleistung kann das zusätzliche Sorptionsmittel bzw. Adsorbens außerdem mit mindestens einem Katalysator imprägniert sein; erfindungsgemäß geeignete Katalysatoren sind beispielsweise Enzyme und/oder Metallionen, vorzugsweise Kupfer-, Silber-, Cadmium-, Platin-, Palladium-, Zink- und/oder Quecksilberionen, wobei die Menge an Katalysator in weiten Bereichen variieren kann und im allgemeinen 0,05 bis 12 Gew.-%, vorzugsweise 1 bis 10 Gew.-%, besonders bevorzugt 2 bis 8 Gew.-%, bezogen auf das Gewicht des zusätzlichen Sorptionsmittels bzw. Adsorbens, beträgt.

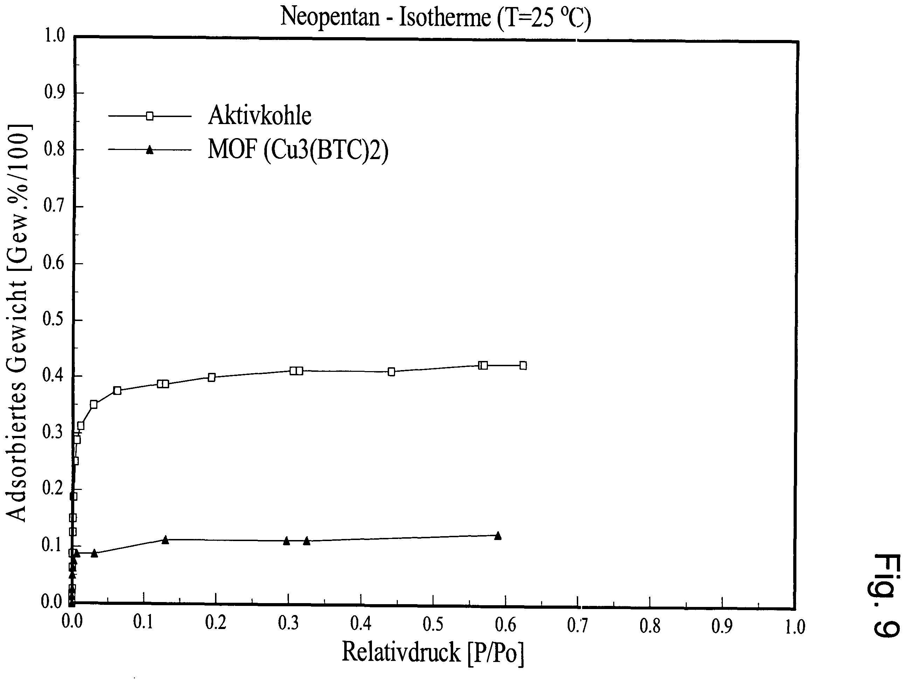

Denn die Anmelderin hat nicht nur - wie zuvor ausgeführt - herausgefunden, dass die erfindungsgemäß als Sorptionsmittel eingesetzten MOF-Materialien ein im Vergleich zu herkömmlichen Adsorbentien (z. B. auf Aktivkohlebasis) verbessertes Sorptionsverhalten, insbesondere Adsorptionsverhalten, gegenüber polaren Substanzen besitzen, sondern andererseits auch, dass aktivkohlebasierte Adsorbentien ein im Vergleich zu MOF-Materialien verbessertes Sorptionsverhalten, insbesondere Adsorptionsverhalten, gegenüber unpolaren Substanzen (z. B. Kohlenwasserstoffe, wie beispielsweise Neopentan etc.) besitzen. So zeigen die in Fig. 9 dargestellten Neopentan-Adsorptionsisothermen von Aktivkohle (siehe obere Kurve in Fig. 9) einerseits und MOF-Material (siehe untere Kurve in Fig. 9, dort konkret Cu₃(BTC)₂ als MOF-Material, vgl. auch nachfolgende Ausführungsbeispiele) andererseits, dass die Aktivkohle das unpolare Neopentan besser bzw. effizienter als das MOF-Material zu adsorbieren imstande ist, was sich in einer im Vergleich zu dem MOF-Material größeren Menge an adsorbiertem Neopentan im Fall von Aktivkohle zeigt - wenngleich das diesbezügliche Adsorptionsvermögen des MOF-Materials immer noch als ausreichend und effizient einzustufen ist.

Die vorstehenden Ergebnisse und Erkenntnisse zeigen, dass die erfindungsgemäß vorgesehene Kombination von MOF-Material einerseits und mindestens einem weiteren, hiervon verschiedenen Adsorbens bzw. Sorptionsmittel auf Basis von Aktivkohle andererseits zu besonders guten Ergebnissen führt, da hier die unterschiedlichen komplementären Eigenschaften der verschiedenen Sorptionsmittel in einem einzigen Sorptionsfiltermaterial miteinander vereint werden und auf diese Weise eine besonders gute Schutz- bzw. Sorptionswirkung erzielt wird.

Weitere Ausgestaltungen, Abwandlungen und Variationen der vorliegenden Erfindung sind für den Fachmann beim Lesen der Beschreibung ohne weiteres erkennbar und realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen.

### AUSFÜHRUNGSBEISPIELE:

### Synthese und Charakterisierung eines metallorganischen Gerüstmaterials vom Typ Zn₂(BTC)₂(DABCO):

In einem Becherglas werden 4,06 g Zn(NO₃)₂ · 4 H₂O und 2,62 g H₃BTC (1,3,5-Benzoltricarbonsäure = Trimesinsäure) in 150 ml DMF (Dimethylformamid) und in einem zweiten Becherglas 0,885 g DABCO (1,4-Diazabicyclo[2.2.2]octan) in 50 ml DMF gelöst. Der Inhalt beider Bechergläser wird vereint, und die entstehende Suspension wird ca. 15 Minuten gerührt. Dann wird das ganze auf 5 Autoklaven verteilt und in einem Trockenschrank dem folgenden Temperaturprogramm unterworfen:

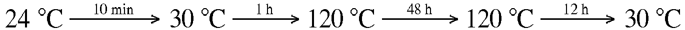

Das entstehende Produkt wird filtriert, mit DMF gewaschen und im Vakuum bei 100 °C getrocknet.

Die Charakterisierung erfolgt mittels Pulverdiffraktogramm. Die Bestimmung der BET-Oberfläche liefert einen Wert von 1.370 m²/g, welcher durch Aktivierung (24 Stunden bei Temperaturen bis unter 200 °C unter Umgebungsatmosphäre) auf ca. 2.055 m²/g gesteigert werden kann.

### Synthese und Charakterisierung eines metallorganischen Gerüstmaterials vom Typ Cu₃(BTC)₂:

Die Synthese von Cu₃(BTC)₂ erfolgt nach der sogenannten HDPE-Flaschen-Methode. Hierzu werden 10,4 g Cu(NO₃)₂ · 3H₂O und 5,0 g Trimesinsäure werden für 10 Minuten in 250 ml eines Lösungsmittelgemisches aus DMF, Ethanol und Wasser (1 : 1 : 1) gerührt, und diese Mischung anschließend in eine 1-Liter-HDPE-Flasche gefüllt. Diese wird gut verschlossen und für 20 Stunden in einem Trockenschrank auf 85 °C erhitzt. Anschließend entnimmt man das Reaktionsgefäß dem Schrank und lässt es schnell auf Zimmertemperatur abkühlen. Der entstandene blaue Feststoff wird abfiltriert und über einen Zeitraum von 3 Tagen in Dichlormethan (DCM) gerührt, um das bei der Synthese in die poröse Struktur eingebaute Lösungsmittel gegen ein leichter entfernbares auszutauschen. Um einen besseren Austausch zu gewährleisten wird täglich abgesaugt und frisches DCM verwendet.

Alternativ kann die Synthese auch in einem Lösungsmittelgemisch aus Ethanol und Wasser (1 : 1) in einem wärme- und druckbeständigen Reaktionsgefäß durchgeführt werden, welches 12 Stunden bei 120 °C autoklaviert wird.

Die Charakterisierung des nach dieser Methode synthetisierten Cu₃(BTC)₂ erfolgt mittels Pulverdiffraktogramm. Die Bestimmung der BET-Oberfläche liefert einen Wert von 1.315 m²/g, welcher durch Aktivierung (24 Stunden bei Temperaturen bis unterhalb 200 °C unter Umgebungsatmosphäre) auf ca. 2.045 m²/g gesteigert werden kann.

### Synthese und Charakterisierung eines metallorganischen Gerüstmaterials vom Typ Al(NDC):

0,26 g (1,2 mmol) 2,6-Naphthalindicarbonsäure werden in 30 ml Dimethylformamid (DMF) gelöst. 0,52 g (1,4 mmol) Al(NO₃)₃ · 9H₂O werden dazugegeben und das Gemisch in einem 250-ml-PTFE-Einsatz in einem Aufschlussbehälter für 20 Stunden bei 110 °C autoklaviert. Nachdem das Produkt abzentrifugiert worden ist, wird das Sediment dreimal mit DMF gewaschen. Das Produkt wird bei 80 °C an Luft getrocknet.

Die Charakterisierung des nach dieser Methode synthetisierten Al(NDC) erfolgt mittels Pulverdiffraktogramm. Die Bestimmung der BET-Oberfläche liefert einen Wert von 1.400 m²/g, welcher durch Aktivierung (16 Stunden bei Temperaturen von etwa 180 °C unter Umgebungsatmosphäre) auf ca. 1.954 m²/g gesteigert werden kann.

### Einbringen von Cu₃(BTC)₂ in eine Polymermatrix:

### a) Herstellung von Komposit-Kugeln:

Eine bestimmte Menge eines vorgegebenen Polymers wird im nachfolgend angegebenen Lösungsmittel mittels Ultraschall gelöst. Darin wird das zuvor gut gemörserte, entweder aktivierte (akt.) oder unaktivierte Cu₃(BTC)₂ dispergiert. Da bei der Aktivierung von Cu₃(BTC)₂ ein Masseverlust von ca. 30 % ein, ist die eingesetzte Menge dementsprechend anzupassen. Diese Dispersion wird mittels Pipette in ein Lösungsmittel getropft, in dem das Polymer unlöslich ist. Dabei fällt das Polymer in Kugelform aus. Die Kugelgröße lässt sich über die Eintropfgeschwindigkeit einstellen, wobei schnelles Tropfen die Entstehung kleinerer und langsames Tropfen die Entstehung größerer Kugeln begünstigt. Die Kugeln werden isoliert und im Trockenschrank bei 100 °C getrocknet.

| Polymer | Eingesetzte Polymermenge | Lösungsmittel (LM) | Eingesetzte LM-Menge | Eingesetzte Cu₃(BTC)₂-Menge | Fällungsmittel |
|---|---|---|---|---|---|
| PET | 0,25 g | HFIP^{*} | 2 ml | 0,5 g (akt.) | Aceton |
| PET | 0,125 g | HFIP | 2 ml | 0,5 g (akt.) | Aceton |
| PET | 0,1 g | HFIP | 3 ml | 0,5 g (akt.) | Aceton |
| PET | 1 g | HFIP | 7,5 ml | 1,8 g | Aceton |
| PET | 1 g | HFIP | 7,5 ml | 1,8 g | Aceton |
| PET | 0,5 g | HFIP | 3,75 ml | 1,5 g | Aceton |
| PET | 0,5 g | HFIP | 3,75 ml | 1,5 g | Aceton |
| PET | 0,5 g | HFIP | 3,75 ml | 1,5 g | Aceton |
| PET | 0,5 g | HFIP | 3,75 ml | 1,4 g | Aceton |

| | | | | | |
|---|---|---|---|---|---|
| *HFIP = 1,1,1,3,3,3-Hexafluorisopropanol | | | | | |

### b) Ergebnisse:

In der folgenden Tabelle sind die Oberflächen der Produkte der jeweiligen Versuche aufgelistet. Aktiviert wird jeweils 24 Stunden bei der angegebenen Temperatur:

| Aktivierungstemperatur | BET-Oberfläche (absolut) | Langmuir-Oberfläche (absolut) | BET-Oberfläche (abzgl. Polymer) | Langmuir-Oberfläche (abzgl. Polymer) |
|---|---|---|---|---|
| 180 °C | 1.222 m²/g | 1.352 m²/g | 1.296 m²/g | 1.469 m²/g |
| 150 °C | 1.166 m²/g | 1.266 m²/g | 1.199 m²/g | 1.271 m²/g |
| 150 °C | 1.170 m²/g | 1.230 m²/g | 1.340 m²/g | 1.460 m²/g |
| 120 °C | 1.260 m²/g | 1.411 m²/g | 1.390 m²/g | 1.617 m²/g |
| 150 °C | 1.210 m²/g | 1.331 m²/g | 1.315 m²/g | 1.477 m²/g |
| 100 °C | 1.343 m²/g | 1.551 m²/g | 1.515 m²/g | 1.827 m²/g |

Die auf diese Weise hergestellten Komposit-Kugeln werden nachfolgend jeweils mittels eines Schmelzklebstoffs auf einem textilen Trägermaterial (Vlies mit ca. 75 g/m² Flächengewicht) in gleichmäßiger Verteilung mit einer Auflagemenge von 40 Gew.-% fixiert, so dass Sorptionsfiltermaterialien resultieren.

### Herstellung von MOF-haltigen Membranen/Folien:

### a) Herstellung der Kompositmembranen/-folien:

Eine bestimmte Menge eines vorgegebenen Polymers wird im angegebenen Lösungsmittel mittels Ultraschall gelöst. Darin wird das zuvor gut gemörserte, aktivierte (akt.) oder unaktivierte Cu₃(BTC)₂ dispergiert. Da bei der Aktivierung von Cu₃(BTC)₂ ein Masseverlust von ca. 30 % eintritt, ist die eingesetzte Menge dementsprechend anzupassen. Diese Dispersion wird in eine Sprühflasche gefüllt und mittels Druckluft auf ein Metallnetz gesprüht, das auf einer Schale mit dem Fällungsmittel (hier: Aceton) liegt. Dieses Lösungsmittel sollte bei Raumtemperatur einen ausreichend hohen Dampfdruck besitzen. Die dabei entstehende Membran oder Folie wird anschließend im Trockenschrank bei 100 °C getrocknet.

| Polymer | Eingesetzte Polymermenge | Lösungsmittel | Eingesetzte LM-Menge | Eingesetze Cu₃(BTC)₂ -Menge | Fällungs lungsmittel |
|---|---|---|---|---|---|
| PET | 0,5 g | DCM : TFAA 1 : 1 | 4 ml | 1,4 g | Aceton |
| PET | 0,5 g | HFIP | 3,75 ml | 1,5 g | Aceton |
| PS | 0,5 g | Toluol | 5 ml | 1,5 g | Pentan |

### b) Ergebnisse:

In der folgenden Tabelle sind die Oberflächen der Produkte der jeweiligen Aktivierungsversuche aufgelistet. Aktiviert wird jeweils 24 Stunden bei der angegebenen Temperatur:

| Aktivierungstemperatur | BET-Oberfläche (absolut) | Langmuir-Oberfläche (absolut) | BET-Oberfläche (abzgl. Polymer) | Langmuir-Oberfläche (abzgl. Polymer) |
|---|---|---|---|---|
| 160 °C | 1.007 m²/g | 1.043 m²/g | 1.011 m²/g | 1.065 m²/g |
| 100 °C | 1.417 m²/g | 1.656 m²/g | 1.626 m²/g | 1.984 m²/g |

Die auf diese Weise hergestellten Kompositmembranen bzw. -folien werden nachfolgend jeweils auf ein textiles Trägermaterial (Polyestergewebe mit ca. 75 g/m² Flächengewicht) vollflächig laminiert, so dass Sorptionsfiltermaterialien mit einer MOF-Materialien enthaltenden Sperrschicht aus Bindemittel resultieren.

### Kompositmaterialien anderer Gestalt:

### a) Herstellung:

Eine bestimmte Menge des vorgegebenen Polymers wird im angegebenen Lösungsmittel mittels Ultraschall gelöst. Darin wird das zuvor gut gemörserte aktivierte Cu₃(BTC)₂ dispergiert. Diese Dispersion wird komplett in das Fällungsmittel gekippt. Beim anschließenden Trockenschritt im Trockenschrank bei 100 °C quellen die "Kugeln" durch Verdampfen des Lösungsmittels auf mehr als das Doppelte auf.

| Polymer | Eingesetzte Polymermenge | Lösungsmittel | Eingesetzte LM-Menge | Eingesetzte Cu₃(BTC)₂-Menge | Fällungs lungsmittel |
|---|---|---|---|---|---|
| PMMA | 1,5 g | Aceton | 10 ml | 0,5 g (akt.) | Pentan |
| PMMA | 0,5 g | Aceton | 5 ml | 0,5 g (akt.) | Pentan |
| PMMA | 0,25 g | Aceton | 3 ml | 0,5 g (akt.) | Pentan |
| PMMA | 0,2 g | Aceton | 2 ml | 0,5 g (akt.) | Pentan |

### b) Ergebnisse:

In der folgenden Tabelle sind die Oberflächen der Produkte der jeweiligen Versuche aufgelistet. Aktiviert wird jeweils 24 Stunden bei der angegebenen Temperatur:

| Aktivierungstemperatur | BET-Oberfläche (absolut) | Langmuir-Oberfläche (absolut) | BET-Oberfläche (abzgl. Polymer) | Langmuir-Oberfläche (abzgl. Polymer) |
|---|---|---|---|---|
| 120 °C | 1.018 m²/g | 1.029 m²/g | 1.120 m²/g | 1.180 m²/g |
| 120 °C | 1.070 m²/g | 1.110 m²/g | 1.140 m²/g | 1.220 m²/g |

Die auf diese Weise hergestellten Kompositmaterialien werden nachfolgend jeweils auf einem textilen Trägermaterial (Polyestergewirke mit ca. 97 g/m² Flächengewicht) fixiert, so dass Sorptionsfiltermaterialien resultieren.

### Weitere Herstellung von Komposit-Kugeln:

Nach der zuvor beschriebenen Methode werden 8,5 g Cu₃(BTC)₂/PET-Kugeln mit einem PET/Cu₃(BTC)₂-Massenverhältnis von 1 : 2 produziert. Hierzu wird frisch nach der zuvor beschriebenen Methode synthetisiertes Cu₃(BTC)₂ verwendet, wobei auf den anschließenden Abkühlvorgang bewusst verzichtet wird, da kleinere Kristallite eine bessere Dispergierbarkeit zur Folge haben.

In den nachfolgend abgebildeten Tabellen sind die durchgeführten Versuche und deren Oberflächen abgebildet:

| Polymer | Eingesetzte Polymermenge | Lösungsmittel | Eingesetzte LM-Menge | Eingesetze Cu₃(BTC)₂ -Menge | Fällungs lungsmittel |
|---|---|---|---|---|---|
| PET | 4 g | HFIP | 30 ml | 9,0 g | Aceton |
| PET | 3 g | HFIP | 22,5 ml | 4,5 g | Aceton |
| PS | 4 g | HFIP | 30 ml | 4,5 g | Aceton |
| PS | 3 g | HFIP | 22,5 ml | 3,0 g | Aceton |

| Aktivierungs-Temperatur/-zeit | BET-Oberfläche (absolut) | BET-Oberfläche (abzgl. Polymer) |
|---|---|---|
| 150 °C/48 h | 1.740 m²/g | 2.069 m²/g |
| 120 °C/48 h | 1.640 m²/g | 1.924 m²/g |
| 150 °C/48 h | 1.322 m²/g | 1.537 m²/g |
| 120 °C/48 h | 1.340 m²/g | 1.567 m²/g |
| 120 °C/48 h | 1.213 m²/g | 1.402 m²/g |
| 120 °C/48 h | 1.232 m²/g | 1.464 m²/g |

Die H₂O-Stabilität von Cu₃(BTC)₂ in den PET- und PS-Kugeln wird untersucht.

Zu diesem Zweck werden die zuvor synthetisierten Kugeln ca. 3 Stunden lang in Wasser bei Raumtemperatur gerührt, um die H₂O-Stabilität zu prüfen. Im Pulverdiffraktogramm konnte kein Unterschied verzeichnet werden.

Die zuvor hergestellten Komposit-Kugeln werden nachfolgend jeweils mittels eines Schmelzklebstoffs auf einem textilen Trägermaterial (Vlies mit ca. 88 g/m² Flächengewicht) in gleichmäßiger Verteilung mit einer Auflagemenge von ca. 35 Gew.-% fixiert, so dass Sorptionsfiltermaterialien resultieren.

### Direktes Aufsprühen der PET/Cu₃(BTC)₂-Suspension auf verschiedene Vliesstoffe

Das PET wird in Hexafluorisopropanol gelöst, mit Cu₃(BTC)₂ versetzt und im Ultraschallbad vermischt. Anschließend wird diese Dispersion nach der Sprühmethode auf verschiedene Vliesstoffe aufgebracht.

Hierbei kann kein Angriff des Vlieses durch das verwendete Lösungsmittel verzeichnet werden. Weiterhin bleibt die spezifische Oberfläche des Cu-MOFs konstant (bezogen auf die eingesetzte Menge Cu₃(BTC)₂).

Die Stabilität der Polymer/Cu₃(BTC)₂-Schicht steigt mit zunehmender Schichtdicke, wobei die Flexibilität abnimmt.

Für die eingesetzte Mischung werden jeweils die zuvor genannten Polymer/Cu₃(BTC)₂-Verhältnisse eingesetzt. Die Zusammensetzungen entsprechen denjenigen der vorangehenden Versuche. Es resultieren Sorptionsfiltermaterialien.

| Aktivierungs- Temperatur | BET-Oberfläche (absolut) ohne Vlies | BET-Oberfläche (abzgl. Polymer) ohne Vlies |
|---|---|---|
| 120 °C/48 h | 1.734 m²/g | 2.060 m²/g |
| 120 °C/48 h | 1.338 m²/g | 1.413 m²/g |
| 120 °C/48 h | 1.222 m²/g | 1.296 m²/g |
| 120 °C/48 h | 1.259 m²/g | 1.360 m²/g |

### Verklebung mittels Schmelzkleber

Ein handelsüblicher Schmelzklebstoff wird bei 150 °C im Trockenschrank aufgeschmolzen und anschließend auf ein Vlies aufgebracht. Danach wird sofort ungemahlenes unaktiviertes Cu₃(BTC)₂ auf den noch flüssigen Kleber gestreut und das ganze durch Andrücken so lange verpresst, bis der Kleber verhärtet ist. Es resultiert ein Sorptionsfiltermaterial.

### Aufbringen mittels einer handelsüblichen Sprühpistole:

Die hier eingesetzte Methode ist äquivalent zu der zuvor beschriebenen Sprühmethode, wobei jedoch eine handelsübliche Airbrush-Pistole (Fa. Conrad Electronic, Typ HP 330) mit einem Düsendurchmesser von 0,4 mm zum Einsatz kommt. Die Farbbecher der Pistole wird gefüllt und mit einem Druck von 3 bis 3,5 bar gleichmäßig auf die Vliesstoffe aufgesprüht. Der Vorteil dieser Methode liegt in der guten Reproduzierbarkeit der resultierenden Schichten auf den Vliesstoffen, ihrer größeren Flexibilität im Vergleich zu den Schichten und der homogeneren Bedeckung der Stoffe.

Die Versuche werden mit zwei verschiedenen Cu₃(BTC)₂/PET-Verhältnissen durchgeführt, wobei die Abriebfestigkeit der entstehenden Schichten mit steigendem PET-Gehalt zunimmt. Es resultieren Sorptionsfiltermaterialien.

| PET/Cu₃(BTC)₂-Verhältnis | Menge an Cu₃(BTC)₂ | Menge an PET | Volumen an HFIP |
|---|---|---|---|
| 1 : 2 | 0,65 g | 0,25 g | 7 ml |
| 1 : 1,4 | 0,5 g | 0,25 g | 7 ml |

### Adsorptionsmessungen und Vergleiche:

Es werden vier Sorptionsfiltermaterialien hergestellt, wobei als Trägermaterial in allen Fällen ein luftdurchlässiges textiles Flächenmaterial in Form eines oleophobierten und hydrophobierten Polyestergewebes mit einem Flächengewicht von ca. 70g/m² diente. In allen vier Fällen werden partikuläre Sorptionsmittel (Auflagemenge Sorptionsmittel: ca. 35 Gew.-% in Bezug auf Sorptionsfiltermaterial) in Form von kornförmigen oder kugelförmigen Sorptionsmittelpartikeln mittels eines Klebstoffs (Auflagemenge Klebstoff: ca. 8 g/m²) in punktrasterförmiger und gleichmäßiger Verteilung auf dem Trägermaterial fixiert.

Die beiden ersten Sorptionsfiltermaterialien dienen zum Vergleich und sind nichterfindungsgemäß. Material 1 ist mit einer nichtimprägnierten mikroporösen Aktivkohle beaufschlagt, während Material mit einer metallsalzimprägnierten Aktivkohle desselben Typs beaufschlagt ist (Cu/Zn/Ag-Imprägnierung mit ca. 4,9 Gew.-% Imprägnierung, bezogen auf Aktivkohle).

Die beiden anderen ebenfalls nichterfindungsgemäßen Sorptionsfiltermaterialien (Material 3 und Material 4) werden mit metallorganischen Gerüstsubstanzen auf Basis von Cu₃(BTC)₂ beaufschlagt, wobei beim Material 3 die metallorganische Gerüstsubstanz in Masse bzw. als solche eingesetzt wird, während sie beim Material 4 in Bindemitteln zu kugelförmigen Gebilden verarbeitet ist (Bindemittel: Polyester; PET/ Cu₃(BTC)₂-Verhältnis = 1,4).

Die Adsorbentien in allen vier Sorptionsfiltermaterialien besitzen vergleichbare Eigenschaften, insbesondere in Bezug auf die inneren Oberflächen und die Mikroporositäten:

| Material | BET-Oberfläche | Mikroporenanteil an Gesamtporen |
|---|---|---|
| 1 (n.e.) | 1.455 m²/g | > 96 % |
| 2 (n.e.) | 1.398 m²/g | > 96 % |
| 3 (n.e.) | 1.435 m²/g | > 98 % |
| 4 (n.e.) | 1.435 m²/g | > 98 % |

| | | |
|---|---|---|
| n.e. = nichterfindungsgemäß | | |

Bei allen vier Sorptionsfiltermaterialien werden die jeweiligen Barrierewirkungen gegenüber Senfgas und Soman gemäß Methode 2.2 der CRDEC-SP-84010 im Rahmen des sogenannten konvektiven Strömungstests (*convective flow test*) bestimmt; zu diesem Zweck lässt man bei konstantem Strömungswiderstand mit einer Strömungsgeschwindigkeit von ca. 0,45 cm/s einen Senfgas bzw. Soman enthaltenden Luftstrom auf das jeweilige Adsorptionsfiltermaterial einwirken und bestimmt die flächenbezogene Durchbruchmenge nach 16 Stunden (80 % relative Luftfeuchtigkeit, 32 °C, 10 · 1 µl HD/12,56 cm², bzw. 12 · 1 µl GD/1256 cm²):

| Material | Senfgas | Soman |
|---|---|---|
| 1 (n.e.) | 2,98 µg/cm² | 3,09 µg/cm² |
| 2 (n.e.) | 1,96 µg/cm² | 2,09 µg/cm² |
| 3 (n.e.) | 1,11 µg/cm² | 1,75 µg/cm² |
| 4 (n.e.) | 1,91 µg/cm² | 1,99 µg/cm² |

| | | |
|---|---|---|
| n.e. = nichterfindungsgemäß | | |

Bei Untersuchungen der vier Sorptionsfiltermaterialien in Bezug auf die Schutzwirkung gegenüber Mikroorganismen werden im Fall der Sorptionsfiltermaterialien 3 und 4 gleichermaßen exzellente Ergebnisse erhalten: Bei Versuchen zur Überprüfung der biostatischen Eigenschaften nach ASTM E2149-01 mit *Klebsiella pneumoniae* bzw. *Staphylococcus aureus* (jeweils 1,5 bis 3,0 x 10⁵ CFU/ml) liegt die prozentuale Reduktion in Bezug auf diese Erreger nach 24 Stunden bei diesen Sorptionsfiltermaterialien (d. h. Materialien 3 und 4) in beiden Fällen oberhalb von 95 %, wohingegen im Falle des Materials 1 bzw. 2 diese Werte bei nur 53 % bzw. 90 % liegen. Dies zeigt, dass auch die biologische Schutzfunktion der Sorptionsfiltermaterialien 3 und 4 verbessert ist.

Vergleichbare Ergebnisse werden auch mit MOF-haltigen Materialien vom Typ Zn₂(BTC)₂(DABCO) erhalten, wobei hier in den beiden zuvor beschriebenen Materialien 3 und 4 die MOF-Komponente jeweils gegen Zn₂(BTC)₂(DABCO) (BET: 1.498 m²/g, Mikroporenanteil > 98 %) ausgetauscht ist, so dass Materialien 5 und 6 resultieren, an denen gleichermaßen der Durchbruch gegenüber Senfgas und Soman bestimmt wird:

| Material | Senfgas | Soman |
|---|---|---|
| 5 (n.e.) | 1,96 µg/cm² | 2,01 µg/cm² |
| 6 (n.e.) | 1,89 µg/cm² | 1,90 µg/cm² |

| | | |
|---|---|---|
| n.e. = nichterfindungsgemäß | | |

Ebenfalls vergleichbare Ergebnisse werden auch mit MOF-haltigen Materialien vom Typ Al(NDC) erhalten, wobei in den beiden zuvor beschriebenen Materialien 3 und 4 die MOF-Komponente jeweils gegen Al(NDC) (BET: 1.376 m²/g, Mikroporenanteil > 98 %) ausgetauscht ist, so dass Materialien 7 und 8 resultieren, an denen gleichermaßen der Durchbruch gegenüber Senfgas und Soman bestimmt wird:

| Material | Senfgas | Soman |
|---|---|---|
| 7 (n.e.) | 1,79 µg/cm² | 1,91 µg/cm² |
| 8 (n.e.) | 1,82 µg/cm² | 1,98 µg/cm² |

| | | |
|---|---|---|
| n.e. = nichterfindungsgemäß | | |

Weiterhin werden die beiden Materialien 3 und 4 dahingehend modifiziert, dass sie zusätzlich mit der nichtimprägnierten mikroporösen Aktivkohle des nichterfindungsgemäßen Materials 1 beaufschlagt werden, wobei jedoch jeweils hälftige Auflagemengen eingesetzt werden, so dass erfindungsgemäße Materialien 9 und 10 resultieren, an denen gleichermaßen der Durchbruch gegenüber Senfgas und Soman bestimmt wird, wobei sich durch die Kombination der MOF-basierten Materialien mit der Aktivkohle eine noch weiter verbesserte Adsorptionseffizienz bei insgesamt gleicher ergibt, was auf einen Synergismus hinweist:

| Material | Senfgas | Soman |
|---|---|---|
| 9 (erf.) | 0,88 µg/cm² | 1,25 µg/cm² |
| 10 (erf.) | 1,66 µg/cm² | 1,39 µg/cm² |

| | | |
|---|---|---|
| erf. = erfindungsgemäß | | |

Die vorstehenden Ergebnisse belegen, dass sich mit metallorganischen Gerüstsubstanzen eine mindestens vergleichbare bis hin zu einer verbesserten Schutzwirkung in Bezug auf chemische und biologische Kampfstoffe wie im Falle einer metallsalzimprägnierten Aktivkohle erhalten lassen. Die metallorganischen Gerüstsubstanzen vereinen in einem einzigen Material eine adsorptive Wirkung einerseits und eine katalytische bzw. biozide oder biostatische Wirkung andererseits. Diese Eigenschaften zeichnen die metallorganischen Gerüstsubstanzen als Sorptionsmittel, insbesondere Adsorbentien, in Sorptionsfiltermaterialien, insbesondere für die Sorption von chemisch und/oder biologischen Schadstoffen, wie chemischen und/oder biologischen Kampfstoffen, aus.

### Einfluss der Aktivierung auf die Sorptionsleistung:

Um den Einfluss der Aktivierung auf die Sorptionseigenschaften zu ermitteln, werden zwei Sorptionsfiltermaterialien hergestellt, wobei als Trägermaterial in beiden Fällen ein luftdurchlässiges textiles Flächenmaterial in Form eines oleophobierten und hydrophobierten Polyestergewebes mit einem Flächengewicht von ca. 105 g/m² diente. In beiden Fällen werden partikuläre Sorptionsmittel (Auflagemenge Sorptionsmittel: ca. 40 Gew.-%, bezogen auf Sorptionsfiltermaterial) in Form von kornförmigen Sorptionsmittelpartikeln mittels eines Klebstoffs (Auflagemenge Klebstoff: ca. 10 g/m²) in punktrasterförmiger und gleichmäßiger Verteilung auf dem Trägermaterial fixiert.

Beide Sorptionsfiltermaterialien (Material 11 und Material 12) werden mit metallorganischen Gerüstsubstanzen auf Basis von Cu₃(BTC)₂ beaufschlagt, wobei beim Material 11 die metallorganische Gerüstsubstanz in nichtaktivierter Form eingesetzt wird, während sie beim Material 12 in aktivierter Form zum Einsatz kommt (Aktivierung über 24 Stunden bei 180 °C unter Umgebungsatmosphäre):

| Material | BET-Oberfläche | Mikroporenanteil an Gesamtporen |
|---|---|---|
| 11 (n.e.) | 1.397 m²/g | >98 % |
| 12 (n.e.) | 1.998 m²/g | >98 % |

| | | |
|---|---|---|
| n.e. = nichterfindungsgemäß | | |

Bei beiden Sorptionsfiltermaterialien werden die jeweiligen Barrierewirkungen gegenüber Senfgas und Soman gemäß Methode 2.2 der CRDEC-SP-84010 im Rahmen des sogenannten konvektiven Strömungstests (*convective flow test*) bestimmt:

| Material | Senfgas | Soman |
|---|---|---|
| 11 (n.e.) | 1,99 µg/cm² | 2,30 µg/cm² |
| 12 (n.e.) | 1,76 µg/cm² | 1,89 µg/cm² |

| | | |
|---|---|---|
| n.e. = nichterfindungsgemäß | | |

Bei Versuchen zur Überprüfung der biostatischen Eigenschaften nach ASTM E2149-01 mit *Klebsiella pneumoniae* bzw. *Staphylococcus aureus* (jeweils 1,5 bis 3,0 x 10⁵ CFU/ml) liegt die prozentuale Reduktion in Bezug auf diese Erreger nach 24 Stunden bei Material 11 bzw. 12 oberhalb von 95 % bzw. 99 %. Durch Aktivierungsbehandlung der eingesetzten MOF-Materialien lässt sich somit eine signifikante Effizienzsteigerung in den betreffenden Sorptionsfiltermaterialien erzielen.

### Figurendarstellungen:

Die Figurendarstellungen zeigen die Diffraktogramme der eingangs hergestellten MOF-Verbindungen Cu₃(BTC)₂, Zn₂(BTC)₂(DABCO) und Al(NDC).

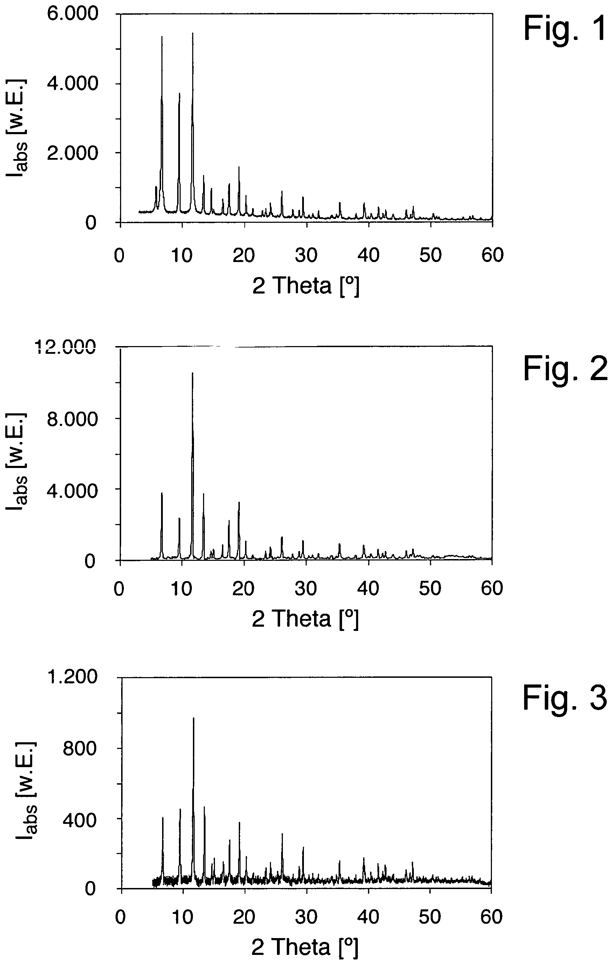

Die Figuren 1 bzw. 2 bzw. 3 zeigen die Diffraktogramme von reinem Cu₃(BTC)₂ (d. h. Cu₃(BTC)₂ in Masse) (= Fig. 1) bzw. von Cu₃(BTC)₂ in Polymerkugeln (PET) (= Fig. 2) bzw. von Cu₃(BTC)₂/PS-Kugeln auf Vlies (= Fig. 3).

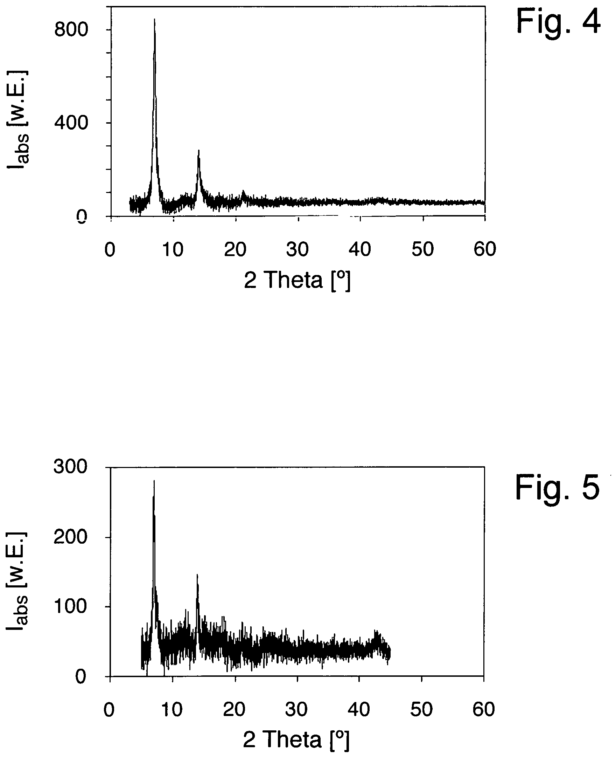

Die Figuren 4 bzw. 5 zeigen die Diffraktogramme von reinem Al(NDC) (d. h. Al(NDC) in Masse) (= Fig. 4) bzw. von Al(NDC)/PS-Kugeln auf Vlies (= Fig. 5).

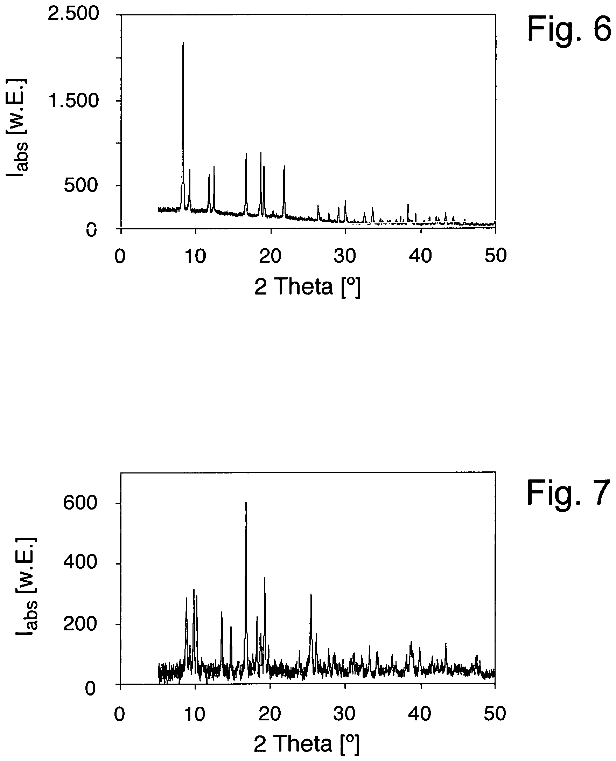

Die Figuren 6 bzw. 7 zeigen die Diffraktogramme von reinem Zn₂(BTC)₂(DABCO) (d. h. Zn₂(BTC)₂(DABCO) in Masse) (= Fig. 6) bzw. von Zn₂(BTC)₂(DABCO)/PET-Kugeln auf Vlies (= Fig. 7).
Die Figur 8 zeigt die Ammoniak-Adsorptionsisothermen von MOF-Material (obere Kurve in Figur 8, dort konkret: Cu₃(BTC)₂) einerseits und Aktivkohle (untere Kurve in Figur 8) andererseits.
Die Figur 9 zeigt die Neopentan-Adsorptionsisothermen von Aktivkohle (obere Kurve in Figur 9) einerseits und MOF-Material (untere Kurve in Figur 9, dort konkret: Cu₃(BTC) andererseits.

## Patentansprüche

1. Sorptionsfiltermaterial, insbesondere Adsorptionsfiltermaterial, insbesondere für die Sorption, vorzugsweise Adsorption, von chemischen und/oder biologischen Schadstoffen, wie chemischen und/oder biologischen Kampfstoffen,
wobei das Sorptionsfiltermaterial mindestens ein gasdurchlässig, insbesondere luftdurchlässig, ausgebildetes Trägermaterial aufweist,
wobei das Trägermaterial mit einem Sorptionsmittel, insbesondere Adsorbens, beaufschlagt ist, wobei das Sorptionsmittel auf Basis mindestens einer metallorganischen Gerüstsubstanz (MOF-Material) ausgebildet ist, insbesondere mindestens eine metallorganische Gerüstsubstanz (MOF-Material) umfasst oder hieraus besteht, und
wobei das Trägermaterial zusätzlich mit einem weiteren Sorptionsmittel auf Aktivkohlebasis beaufschlagt ist.

2. Sorptionsfiltermaterial nach Anspruch 1,
wobei das Trägermaterial eine dreidimensionale Struktur aufweist, insbesondere wobei das Trägermaterial als vorzugsweise offenporiger Schaumstoff, besonders bevorzugt Polyurethanschaumstoff, ausgebildet ist.

3. Sorptionsfiltermaterial nach Anspruch 1,
wobei das Trägermaterial eine zweidimensionale und/oder flächige Struktur aufweist, insbesondere wobei das Trägermaterial als vorzugsweise textiles Flächengebilde, vorzugsweise als ein luftdurchlässiges Textilmaterial, bevorzugt als ein Gewebe, Gewirke, Gestricke, Gelege oder Textilverbundstoff, insbesondere als Vlies (Nonwoven), ausgebildet ist und/oder insbesondere wobei das Trägermaterial ein Flächengewicht von 5 bis 1.000 g/m², insbesondere 10 bis 500 g/m², bevorzugt 25 bis 450 g/m², aufweist.

4. Sorptionsfiltermaterial nach einem der vorangehenden Ansprüche,
wobei das Sorptionsmittel auf Basis mindestens einer metallorganischen Gerüstsubstanz (MOF-Material) mittels Verklebung an dem Trägermaterial fixiert ist, insbesondere mittels eines Klebstoffs oder infolge Eigenklebrigkeit oder Eigenadhäsion.

5. Sorptionsfiltermaterial nach einem der vorangehenden Ansprüche,
wobei das Sorptionsmittel auf Basis mindestens einer metallorganischen Gerüstsubstanz (MOF-Material) teilchenförmig und/oder in partikulärer Form vorliegt, insbesondere in Kornform, bevorzugt in Kugelform, insbesondere wobei der mittlere Teilchendurchmesser des teilchenförmigen und/oder partikulären Sorptionsmittels im Bereich von 0,01 µm bis 10,0 mm, insbesondere 0,1 µm bis 5,0 mm, vorzugsweise 0,5 µm bis 2,5 mm, besonders bevorzugt 1 µm bis 2,0 mm, ganz besonders bevorzugt 10 µm bis 1,5 mm, liegt.

6. Sorptionsfiltermaterial nach einem der Ansprüche 1 bis 5,
wobei das Sorptionsmittel auf Basis mindestens einer metallorganischen Gerüstsubstanz (MOF-Material) aus der mindestens einen metallorganischen Gerüstsubstanz (MOF-Material) besteht.

7. Sorptionsfiltermaterial nach einem der Ansprüche 1 bis 5,
wobei das Sorptionsmittel auf Basis mindestens einer metallorganischen Gerüstsubstanz (MOF-Material) eine Mischung aus metallorganischen Gerüstsubstanz (MOF-Material) einerseits und organischem Bindemittel andererseits umfasst und/oder wobei das Sorptionsmittel die mindestens eine metallorganischen Gerüstsubstanz (MOF-Material) in einer in einem organischem Bindemittel eingelagerten Form umfasst.

8. Sorptionsfiltermaterial nach einem der vorangehenden Ansprüche,
wobei die metallorganische Gerüstsubstanz (MOF-Material) in kristalliner Form vorliegt, insbesondere wobei der Kristallinitätsgrad mindestens 60 %, insbesondere mindestens 70 %, vorzugsweise mindestens 80 %, besonders bevorzugt mindestens 90 %, besonders bevorzugt mindestens 95 %, ganz besonders bevorzugt mindestens 99 % oder mehr, beträgt, und/oder wobei die metallorganische Gerüstsubstanz (MOF-Material) in aktivierter Form, vorzugsweise mittels Wärmebehandlung, insbesondere bei Temperaturen im Bereich von 90 °C bis 300 °C, vorzugsweise 100 °C bis 250 °C, bevorzugt 110 °C bis 220 °C, vorliegt.

9. Sorptionsfiltermaterial nach einem der vorangehenden Ansprüche,
wobei die metallorganische Gerüstsubstanz (MOF-Material) innere Hohlräume, insbesondere Poren, aufweist und/oder wobei die metallorganische Gerüstsubstanz (MOF-Material) porös ausgebildet ist, und/oder wobei die metallorganische Gerüstsubstanz (MOF-Material) ein Gesamtporenvolumen nach Gurvich von mindestens 0,1 cm³/g, insbesondere mindestens 0,2 cm³/g, vorzugsweise mindestens 0,3 cm³/g, aufweist und/oder wobei die metallorganische Gerüstsubstanz (MOF-Material) ein Gesamtporenvolumen nach Gurvich von bis zu 2,0 cm³/g, insbesondere bis zu 3,0 cm³/g, vorzugsweise bis zu 4,0 cm³/g, besonders bevorzugt bis zu 5,0 cm³/g, aufweist.

10. Sorptionsfiltermaterial nach einem der vorangehenden Ansprüche,
wobei das Sorptionsmittel auf Basis mindestens einer metallorganischen Gerüstsubstanz (MOF-Material) in einer Auflagemenge im Bereich von 5 bis 95 Gew.-%, insbesondere 7,5 bis 90 Gew.-%, vorzugsweise 10 bis 80 Gew.-%, besonders bevorzugt 12,5 bis 75 Gew.-%, ganz besonders bevorzugt 15 bis 70 Gew.-%, bezogen auf das Sorptionsfiltermaterial, vorhanden ist.

11. Sorptionsfiltermaterial nach einem der vorangehenden Ansprüche,
wobei das Sorptionsmittel auf Aktivkohlebasis als kornförmige Aktivkohlepartikel, insbesondere mit mittleren Durchmessern der Aktivkohlepartikel von weniger als 1,0 mm, vorzugsweise weniger als 0,8 mm, bevorzugt weniger als 0,6 mm, und von mindestens 0,1 mm, ausgebildet ist.

12. Schutzmaterialien, insbesondere für den zivilen oder militärischen Bereich, insbesondere Schutzbekleidung, wie Schutzanzüge, Schutzhandschuhe, Schutzschuhwerk, Schutzsocken, Kopfschutzbekleidung und dergleichen, sowie Schutzabdeckungen, vorzugsweise alle vorgenannten Schutzmaterialien für den ABC-Einsatz, aufweisend ein Sorptionsfiltermaterial nach einem der vorangehenden Ansprüche.

13. Filter und Filtermaterialien, insbesondere zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, aufweisend ein Sorptionsfiltermaterial nach einem der vorangehenden Ansprüche.

## Claims

1. Sorption filter material, particularly adsorption filter material, particularly for sorption, preferably adsorption, of chemical and/or biological pollutants, such as chemical and/or biological warfare agents,
wherein the sorption filter material has at least one substrate material that is gas-permeable, particularly air-permeable,
wherein the substrate material is impinged with a sorption agent, particularly an adsorbent, wherein the sorption agent is designed based on at least one metal-organic framework substance (MOF material), particularly comprising at least one metal-organic framework substance (MOF material) or consisting thereof, and
wherein the substrate material is additionally impinged with a further sorption agent on an activated carbon base.

2. The sorption filter material according to claim 1,
wherein the substrate material has a three-dimensional structure, particularly wherein the substrate material is designed as preferably open-pored foam, particularly preferably polyurethane foam.

3. The sorption filter material according to claim 1,
wherein the substrate material has a two-dimensional and/or planar structure, particularly wherein the substrate material is formed as a preferably textile fabric, preferably an air-permeable textile material, more preferably a woven cloth, knit fabric, mesh fabric or laminate or a textile composite, in particular a nonwoven fabric, and/or particularly wherein the substrate material has a basis weight of 5 to 1000 g/m², particularly 10 to 500 g/m², more preferably 25 to 450 g/m².

4. The sorption filter material according to one of the preceding claims,
wherein the sorption agent based on at least one metal-organic framework substance (MOF material) is fixed by means of bonding to the substrate material, particularly by means of an adhesive or as a result of self-adhesiveness or self-adhesion.

5. The sorption filter material according to one of the preceding claims,
wherein the sorption agent based on at least one metal-organic framework substance (MOF material) is particle-shaped and/or in particulate form, particularly granular, more preferably in spherical form, particularly wherein the average particle diameter of the particle-shaped and/or particulate sorption agent is in the range of 0.01 µm to 10.0 mm, particularly 0.1 µm to 5.0 mm, preferably 0.5 µm to 2.5 mm, particularly preferably 1 µm to 2.0 mm, very particularly preferably 10 µm to 1.5 mm.

6. The sorption filter material according to one of claims 1 to 5,
wherein the sorption agent based on at least one metal-organic framework substance (MOF material) consists of the at least one metal-organic framework substance (MOF material).

7. The sorption filter material according to one of claims 1 to 5,
wherein the sorption agent based on at least one metal-organic framework substance (MOF material) comprises a mixture of metal-organic framework substance (MOF material) on one hand and organic binder on the other and/or wherein the sorption agent comprises the at least one metal-organic framework substance (MOF material) in a form being embedded in an organic binder.

8. The sorption filter material according to one of the preceding claims,
wherein the metal-organic framework substance (MOF material) is in crystalline form, particularly wherein the degree of crystallinity is at least 60%, particularly at least 70%, preferably at least 80%, particularly preferably at least 90%, very particularly preferably at least 95%, extremely particularly preferably at least 99% or more, and/or wherein the metal-organic framework substance (MOF material) exists in activated form, preferably by means of heat treatment, particularly at temperatures in the range of 90°C to 300°C, preferably 100°C to 250°C, more preferably 110°C to 220°C.

9. The sorption filter material according to one of the preceding claims,
wherein the metal-organic framework substance (MOF material) has internal cavities, particularly pores, and/or wherein the metal-organic framework substance (MOF material) is designed to be porous, and/or wherein the metal-organic framework substance (MOF material) has a total pore volume according to Gurvich of at least 0.1 cm³/g, particularly at least 0.2 cm³/g, preferably at least 0.3 cm³/g, and/or wherein the metal-organic framework substance (MOF material) has a total pore volume according to Gurvich of up to 2.0 cm³/g, particularly up to 3.0 cm³/g, preferably up to 4.0 cm³/g, particularly preferably up to 5.0 cm³/g.

10. The sorption filter material according to one of the preceding claims,
wherein the sorption agent base on at least one metal-organic framework substance (MOF material) is present in a coating quantity in the range of 5 to 95 wt.%, particularly 7.5 to 90 wt.%, preferably 10 to 80 wt.%, particularly preferably 12.5 to 75 wt.%, very particularly preferably 15 to 70 wt.%, relative to the sorption filter material.

11. The sorption filter material according to one of the preceding claims,
wherein the sorption agent on an activated carbon bases is designed as a granular activated carbon particle, particularly with an average diameter of the activated carbon particle of less than 1.0 mm, preferably less than 0.8 mm, more preferably less than 0.6 mm, and of at least 0.1 mm.

12. Protective materials, in particular for civilian or military applications, in particular protective clothing, such as protective suits, protective gloves, protective footwear, protective socks, protective headwear and the like, and protective covers of all kinds, preferably all the above-stated protective materials for ABC use comprising a sorption filter material according to one of the preceding claims.

13. Filters and filter materials, in particular for the removal of harmful, odorous and toxic agents of all kinds, in particular from air and/or gas streams, such as ABC protective mask filters, odour filters, panel filters, air filters, in particular filters for purifying room air, adsorptive carrier structures and filters for medical applications comprising a sorption filter material according to one of the preceding claims.

## Revendications

1. Matériau pour filtre à sorption, en particulier matériau pour filtre à adsorption, en particulier pour la sorption, de préférence l'adsorption, de substances nocives chimiques et/ou biologiques, telles que des armes chimiques et/ou biologiques,
le matériau pour filtre à sorption présentant au moins un matériau support se présentant sous forme perméable aux gaz, en particulier perméable à l'air,
le matériau support étant chargé d'un sorbant, en particulier un adsorbant, le sorbant étant à base d'au moins un réseau métallo-organique (matériau MOF), en particulier comprenant au moins un réseau métallo-organique (matériau MOF) ou en étant constitué, et
le matériau support étant en outre chargé d'un sorbant supplémentaire à base de charbon actif.

2. Matériau pour filtre à sorption selon la revendication 1,
le matériau support présentant une structure tridimensionnelle, en particulier le matériau support se présentant sous forme d'une mousse de préférence à alvéoles ouverts, d'une manière particulièrement préférée d'une mousse de polyuréthane.

3. Matériau pour filtre à sorption selon la revendication 1,
le matériau support présentant une structure bidimensionnelle et/ou plane, le matériau support se présentant sous forme d'une étoffe de préférence textile, de préférence d'un matériau textile perméable à l'air, de préférence d'un tissu, d'un tricot, d'un tissu à mailles, d'un treillis ou d'un composite textile, en particulier d'un non-tissé (nonwoven), et/ou en particulier le matériau support présentant une masse surfacique de 5 à 1 000 g/m², en particulier de 10 à 500 g/m², de préférence de 25 à 450 g/m².

4. Matériau pour filtre à sorption selon l'une quelconque des revendications précédentes, le sorbant à base d'au moins un réseau métallo-organique (matériau MOF) étant fixé par collage au matériau support, en particulier à l'aide d'un adhésif ou suite à une auto-adhésivité ou une auto-adhérence.

5. Matériau pour filtre à sorption selon l'une quelconque des revendications précédentes, le sorbant à base d'au moins un réseau métallo-organique (matériau MOF) se présentant sous forme de particules et/ou sous forme particulaire, en particulier sous forme de grains, de préférence sous forme sphérique, en particulier la granulométrie moyenne du sorbant sous forme de particules et/ou particulaire étant comprise dans la plage de 0,01 µm à 10,0 mm, en particulier de 0,1 µm à 5,0 mm, de préférence de 0,5 µm à 2,5 mm, d'une manière particulièrement préférée de 1 µm à 2,0 mm, d'une manière tout particulièrement préférée de 10 µm à 1,5 mm.

6. Matériau pour filtre à sorption selon l'une quelconque des revendications 1 à 5,
le sorbant à base d'au moins un réseau métallo-organique (matériau MOF) étant constitué d'au moins un réseau métallo-organique (matériau MOF).

7. Matériau pour filtre à sorption selon l'une quelconque des revendications 1 à 5,
le sorbant à base d'au moins un réseau métallo-organique (MOF) comprenant un mélange d'une part d'un réseau métallo-organique (matériau MOF) et d'autre part d'un liant organique, et/ou le sorbant comprenant le ou les réseaux métallo-organiques (matériaux MOF) sous une forme incorporée dans un liant organique.

8. Matériau pour filtre à sorption selon l'une quelconque des revendications précédentes, le réseau métallo-organique (matériau MOF) se présentant sous forme cristalline, en particulier le degré de cristallinité étant d'au moins 60 %, en particulier d'au moins 70 %, de préférence d'au moins 80 %, d'une manière particulièrement préférée d'au moins 90 %, d'une manière particulièrement préférée d'au moins 95 %, d'une manière tout particulièrement préférée d'au moins 99 % ou plus, et/ou le réseau métallo-organique (matériau MOF) se présentant sous forme activée, de préférence à l'aide d'un traitement thermique, en particulier à des températures comprises dans la plage de 90 °C à 300 °C, en particulier de 100 °C à 250 °C, de préférence de 110 °C à 220 °C.

9. Matériau pour filtre à sorption selon l'une quelconque des revendications précédentes, le réseau métallo-organique (matériau MOF) présentant des cavités internes, en particulier des pores, et/ou le réseau métallo-organique (matériau MOF) se présentant sous forme poreuse, et/ou le réseau métallo-organique (matériau MOF) présentant un volume total des pores d'après Gurvich d'au moins 0,1 cm³/g, en particulier d'au moins 0,2 cm³/g, de préférence d'au moins 0,3 cm³/g, et/ou le réseau métallo-organique (matériau MOF) présente un volume total des pores selon Gurvich allant jusqu'à 2,0 cm³/g, en particulier jusqu'à 3,0 cm³/g, de préférence jusqu'à 4,0 cm³/g, d'une manière particulièrement préférée jusqu'à 5,0 cm³/g.

10. Matériau pour filtre à sorption selon l'une quelconque des revendications précédentes, le sorbant à base d'au moins un réseau métallo-organique (matériau MOF) étant présent selon une quantité appliquée comprise dans la plage de 5 à 95 % en poids, en particulier de 7,5 à 90 % en poids, de préférence de 10 à 80 % en poids, d'une manière particulièrement préférée de 12,5 à 75 % en poids, d'une manière tout particulièrement préférée de 15 à 70 % en poids, par rapport au matériau pour filtre à sorption.

11. Matériau pour filtre à sorption selon l'une quelconque des revendications précédentes, le sorbant à base de charbon actif se présentant sous forme de particules de charbon actif granulaires, ayant en particulier un diamètre moyen des particules de charbon actif inférieur à 1,0 mm, de préférence inférieur à 0,8 mm, préférentiellement inférieur à 0,6 mm, et d'au moins 0,1 mm.

12. Matériaux de protection, en particulier pour le domaine civil ou militaire, en particulier vêtements de protection, tels que des combinaisons de protection, des gants de protection, des chaussures de protection, des chaussettes de protection, des vêtements de protection de la tête et analogues, tels que des capuchons de protection, de préférence tous les matériaux de protection mentionnés ci-dessus pour une utilisation NRBC, comprenant un matériau pour filtre à sorption selon l'une quelconque des revendications précédentes.

13. Filtre et matériaux filtrants, en particulier pour éliminer des substances nocives, malodorantes et toxiques de toutes sortes, provenant en particulier de flux d'air et/ou de gaz, tels que des filtres pour masques de protection NRBC, des filtres anti-odeur, des filtres de surface, des filtres à air, en particulier des filtres pour la purification de l'air ambiant, des structures supports adsorbantes et des filtres pour le domaine médical, présentant un matériau pour filtre à sorption selon l'une quelconque des revendications précédentes.
